# EUROPÄISCHE PATENTANMELDUNG

(11) **EP 2 130 888 A2**
(43) Veröffentlichungstag der Anmeldung: **09.12.2009**
(21) Anmeldenummer: 09161859.5
(22) Anmeldetag: 03.06.2009
(51) Int. Cl.: C09J 7/02

(54) **Klebeband für den fliegenden Rollenwechsel**

(30) Priorität: 03.06.2008 DE 102008026448; 27.11.2008 DE 102008060181
(71) Anmelder: TESA SE, 20253 Hamburg (DE)
(72) Erfinder: Götz, Kerstin, 22547 Hamburg (DE); Wulf, Stefan, Dr., 40166 Mönchengladbach (DE); Nagel, Christoph, 22417 Hamburg (DE)

(57) **Zusammenfassung**

Die Erfindung betrifft ein Klebeband für den fliegenden Rollenwechsel mit einer linken (I) und einer rechten (r) Begrenzungskante, umfassend zumindest einen Hauptträger und eine erste Selbstklebemassenschicht auf der Oberseite (O) des Hauptträgers, wobei auf der Unterseite (U) des Hauptträgers ein Trennsystem vorgesehen ist, das geeignet ist, eine Klebeverbindung auf einem Substrat zu bewirken, die derart wieder trennbar ist, dass weder auf der Unterseite des Hauptträgers noch auf dem Substrat im Bereich der getrennten Verbindung klebende Rückstände verbleiben, wobei das Trennsystem in Form eines mehrfach unterbrochenen Streifens aus einer Mehrzahl von Segmenten aufgebaut ist, der sich in Längsrichtung des Klebebandes (x-Richtung) erstreckt, wobei die Begrenzungskante jedes der Segmente durch eine Kurve F dargestellt werden kann, die bezüglich eines rechtshändischen, kartesischen (orthogonalen) Koordinatensystems, mit einer in Längsrichtung des Klebebandes liegenden x-Achse und einer senkrecht hierauf stehenden, von links nach rechts zeigenden y-Achse, folgende Bedingungen erfüllt: einen am weitesten rechts liegenden Punkt E₁(x₁/yₘₐₓ) ("Extremwert") oder einen eine Mehrzahl am weitesten rechts liegender Punkte umfassenden Bereich B₁ ("Extremwertbereich"), der durch die Punkte E₁ₐ(x₁ₐ/yₘₐₓ) und E_{1b}(x_{1b}/yₘₐₓ) begrenzt ist, mit x₁ₐ<x_{1b}, einen am wenigsten weit in x-Richtung liegenden Punkt E₂(xₘᵢₙ/y₂) oder einen eine Mehrzahl am wenigsten weit in x-Richtung liegender Punkte umfassenden Bereich B₂, der durch die Punkte E₂ₐ(xₘᵢₙ/y₂ₐ) und E_{2b}(xₘᵢₙ/y_{2b}) begrenzt ist, mit y₂ₐ < y_{2b}, einen am weitesten in x-Richtung liegenden Punkt E₃(xₘₐₓ/y₃) oder einen eine Mehrzahl am weitesten in x-Richtung liegender Punkte umfassenden Bereich B₃, der durch die Punkte E₃ₐ(xₘₐₓ/y₃ₐ) und E_{3b}(xₘₐₓ/y_{3b}) begrenzt ist, mit y₃ₐ < y_{3b}, einen ansteigenden Kurvenabschnitt (Fₛ), der durch die Punkte E₂ bzw. E_{2b} und E₁ bzw. E₁ₐ begrenzt ist, einen abfallenden Kurvenabschnitt (F_{f}), der durch die Punkte E₁ bzw. E_{1b} und E₃ bzw. E_{3b} begrenzt ist, und wobei für die Mehrzahl der Segmente die Steilheit im ansteigenden Kurvenabschnitt (Fₛ) geringer ist als die Steilheit im abfallenden Kurvenabschnitt (F_{f}), wobei die Steilheit (im Sinne dieser Schrift) eines Kurvenabschnitts den Betrag der Steigung einer Geraden ("Steilheitsgerade") durch die zwei den Kurvenabschnitt begrenzenden Kurvenpunkte bedeutet.

## Beschreibung

Die Erfindung betrifft ein Klebeband für den fliegenden Rollenwechsel von auf Rollen aufgewickeltem Flachbahnmaterial gemäß den Merkmalen des Oberbegriffs des Hauptanspruchs sowie ein Verfahren für den fliegenden Rollenwechsel von auf Rollen aufgewickeltem Flachbahnmaterial.

Bei der Verarbeitung von Flachbahnmaterial (Papier, Folien, Vliese oder dergleichen) ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig (Haft-)Klebebänder zum Einsatz, um das Ende der alten Bahn mit dem Anfang der neuen Bahn zu verbinden (zu "splicen" oder zu "spleißen", das Verfahren wird auch als "Spliceverfahren" oder "Spleißverfahren" bezeichnet).

Seit Jahren sind dabei Klebebänder bekannt, die in gerader Linie unter oder auf die oberste Lage der neuen Rolle verklebt werden und so die Funktion des Rollenverschlusses sowie die des Splice-Klebebands (Klebeband, das die neue Flachbahn (insbesondere eine Papierbahn) mit der alten, auslaufenden Flachbahn verbindet) in sich vereinigen.
Während des Splice-Vorganges muss der Rollenverschluss öffnen, um ein Anbinden der neuen Flachbahn an den Endbereich der auslaufenden Flachbahn zu ermöglichen, so dass nach dem Splice-Prozess die neue Flachbahn in kontinuierlicher Prozessführung von der neuen Rolle abläuft.
US 5,323,981 offenbart ein zweiseitiges Klebeband, das auf der Außenseite eine hochtackige Klebmasse für den fliegenden Rollenwechsel aufweist. Auf der Rückseite sind zwei Klebmassen positioniert, die vorteilhafterweise eine klebmassenfreie Zone zwischen den Klebmassen aufweist. Dabei wird die hintere Klebmasse, die permanent klebend ist, auf die oberste Lage der neuen Rolle verklebt und die vordere Klebmasse, die repositionierbar ist über die oberste Lage auf die 2. Lage verklebt. Die repositionierbare Klebmasse erfüllt bei dieser Variante die Aufgabe des Rollenverschlusses. Im Falle des fliegenden Rollenwechsels kommt es zum Kontakt der ablaufenden Bahn mit der neuen Rolle auf der Oberseite des Klebebandes. Die repositionierbare Klebmasse löst sich vom Material der 2. Lage und die neue Rolle wird in die Maschine eingezogen, gehalten durch die permanent klebende Klebmasse am Klebeband-Ende.
WO 95/29115 offenbart einähnliches Klebeband. Dieses zweiseitige Klebeband weist auf der Oberseite zwei Klebemassen und auf der Unterseite eine Klebmasse auf.
Dieses Klebeband wird unter die oberste Lage der neuen Rolle fixiert. Dabei hält die eine Klebmasse die oberste Lage fest. Die 2. Klebmasse ist für den Kontakt mit der ablaufenden Bahn zuständig. Auf der Rückseite ist auch eine repositionierbare Klebmasse, die im Falle des Splices die oberste Lage freigibt.
Beide Klebebänder weisen einen gemeinsamen Nachteil auf. Bei beiden läuft die repositionierbare Klebmasse offen durch die Veredelungsmaschine, so dass es zu Bahnverklebungen an Umlenkrollen oder Drucktüchern geben kann. Diese können dann zu Bahnabrissen führen.
Eine Verbesserung dieses Problems lehrte DE 196 28 317. Das Klebeband ist ähnlich dem von WO 95/29115 aufgebaut, allerdings ist die repositionierbare Klebmasse der Rückseite durch ein zweiseitiges Klebeband mit einem spaltfähigen Träger ersetzt. Im Falle des Splices spaltet der Träger und deckt mit den jeweiligen Spaltresten die Klebmassen so ab, dass diese nichtklebrig verbleiben. Damit werden störende Verklebungen beim Durchlauf durch die Veredelungsmaschinen verhindert.
Eine weitere Verbesserung lehrt DE 199 02 179. Dabei ist der Spaltstreifen von der vorderen Kante eingerückt. Durch diese Einrückung lässt sich die Spliceeffizienz deutlich steigern.
DE 198 41 609 beschreibt ein zweiseitig klebendes Haftelement. Der Träger besteht nicht aus einem einschichtigen Papier, sondern aus einem Papier/Papierverbund, der mit aushärtenden Klebepunkten verbunden ist. Dieses Klebeband wird auch unter die oberste Lage geklebt. Im Falle des Splices reißen die Klebepunkte Papierfasern aus einem der Verbundpapiere und so wird die oberste Lage freigegeben.
All diese Produkte weisen einen Nachteil auf. Das spaltbare System, sei es nun ein Papier, eine Verbund aus 2 Papieren, ein Papier / Folien Verbund, ein Verbund aus 2 Folien oder eine Polymerschicht die spaltet, zeigt einen Kraftpeak im Moment des Anspaltens dadurch begründet, dass das spaltbare System auf ganzer Breite gleichzeitig spaltet.
Besonders bei Verwendung des Spliceklebebandes auf gestrichenen Papieren, und hier besonders gestrichenen Tiefdruckpapieren, führen die Kraftspitzen immer wieder zum Versagen des Klebebandes. Das Versagen ist unter anderem darin begründet, dass die Spaltkräfte höher als die Verankerungskräfte des Papierstrichs sein können, dann trennt sich der Strich vom Papier. Oder die Spaltkräfte sind sogar höher als die innere Festigkeit des Papiers, dann kommt es zu Papierabrissen. In beiden Fällen misslingt der Splice.

Eine Verbesserung lehrt DE 100 58 956 A1. Um eine Kraftspitze zu vermeiden, ist der Spaltstreifen zackig ausgeführt. Dabei deuten die Spitzen der Zacken in Laufrichtung des Prozesses, so dass im Moment des Splice die Spitze der Zacke zu spalten beginnt. Aufgrund der kleinen Fläche in der Spitze sind auch die Kraftwerte reduziert.
Dieses System weist allerdings den Nachteil auf, dass in der Spitze der Zacke die Verklebungsfläche gegen 0 geht. Somit reicht die Klebkraft in der Spitze nicht aus, um ein Spalten in der Spitze zu gewährleisten. Abhängig von der zu spaltenden Papierqualität kommt es zu einem Spalten unterhalb der Spitze, nämlich dort wo die Klebkräfte höher als die Spaltkräfte sind. Das heißt es laufen zum Teil ungespaltene Bestandteile des Spaltstreifens durch die Druck- oder Papierweiterverarbeitungsmaschine, die zu Verunreinigungen führen können. Da die Klebkräfte des spaltbaren Systems abhängig von der Papiertype sind, variiert die Größe dieser nichtgespaltenen Bestandteile und damit auch die Kraft, die zum Spalten benötigt wird.
Eine Verbesserung lehrt die DE 10 2005 051 181 A1. Hier ist der Spaltstreifen nicht zackig ausgeführt, sondern in den Spitzen abgerundet. Dies führt zu einer Vergrößerung der Klebefläche, die immer eine ausreichende Klebkraft generiert und dadurch ein sicheres Spalten gewährleistet.

Allerdings zeigen die nicht geraden Geometrien des spaltbaren Systems eine Schwäche. Beim Abrollen des Klebebandes mit dem spaltbaren System von einer Klebebandrolle kommt es zu Spannungen an den quer zur Abwickelrichtung stehenden Anlaufkanten des spaltenden Systems und in einigen Fällen zum Anspalten des Spaltstreifens. Das frühzeitige Anspalten tritt vor allem bei Wellenformen bzw. Geometrien auf, die sich durch eine hohe Steigung der Geometrie auszeichnen. Da das spaltende System ein zusammenhängendes Flächengebilde darstellt, kann das unerwünschte Anspalten über eine längere Strecke des spaltbaren Systems laufen. Besonders kritisch ist es in den Fällen, in denen es nicht vom Anwender bemerkt wird, da die Spliceperformance sinkt. Bemerkt der Anwender das Anspalten, muss das Klebeband neu appliziert werden, was zeitaufwendig ist und die Produktivität negativ beeinflusst.

Aufgabe der Erfindung ist es, ein Klebeband anzubieten, welches die Nachteile des Standes der Technik vermeidet und insbesondere ein zuverlässiges Abrollen von der Klebebandrolle und Applizieren des Klebebandes ohne frühzeitiges Anspalten ermöglicht.

Gelöst wird die Aufgabe durch ein Klebeband für den fliegenden Rollenwechsel mit einer linken (I) und einer rechten (r) Begrenzungskante, umfassend zumindest einen Hauptträger und eine erste Selbstklebemassenschicht auf der Oberseite (O) des Hauptträgers, wobei auf der Unterseite (U) des Hauptträgers ein Trennsystem vorgesehen ist, das geeignet ist, eine Klebeverbindung auf einem Substrat zu bewirken, die derart wieder trennbar ist, dass weder auf der Unterseite des Hauptträgers noch auf dem Substrat im Bereich der getrennten Verbindung klebende Rückstände verbleiben,
wobei das Trennsystem in Form eines mehrfach unterbrochenen Streifens aus einer Mehrzahl von Segmenten aufgebaut ist, der sich in Längsrichtung des Klebebandes (x-Richtung) erstreckt,
wobei die Begrenzungskante jedes der Segmente durch eine Kurve F dargestellt werden kann, die bezüglich eines rechtshändischen, kartesischen (orthogonalen) Koordinatensystems, mit einer in Längsrichtung des Klebebandes liegenden x-Achse und einer senkrecht hierauf stehenden, von links nach rechts zeigenden y-Achse, folgende Bedingungen erfüllt:
- einen am weitesten rechts liegenden Punkt E₁(x₁/yₘₐₓ) ("Extremwert")
   oder einen eine Mehrzahl am weitesten rechts liegender Punkte umfassenden Bereich B₁ ("Extremwertbereich"), der durch die Punkte E₁ₐ(x₁ₐ/yₘₐₓ) und E_{1b}(x_{1b}/yₘₐₓ) begrenzt ist, mit X₁ₐ < X_{1b},
- einen am wenigsten weit in x-Richtung liegenden Punkt E₂(xₘᵢₙ/y₂)
   oder einen eine Mehrzahl am wenigsten weit in x-Richtung liegender Punkte umfassenden Bereich B₂, der durch die Punkte E₂ₐ(xₘᵢₙ/y₂ₐ) und E_{2b}(xₘᵢₙ/y_{2b}) begrenzt ist, mit y₂ₐ < y_{2b},
- einen am weitesten in x-Richtung liegenden Punkt E₃(xₘₐₓ/y₃)
   oder einen eine Mehrzahl am weitesten in x-Richtung liegender Punkte umfassenden Bereich B₃, der durch die Punkte E₃ₐ(xₘₐₓ/y₃ₐ) und E_{3b}(xₘₐₓ/y_{3b}) begrenzt ist, mit y₃ₐ < y_{3b,}
- einen ansteigenden Kurvenabschnitt (Fₛ), der durch die Punkte E₂ bzw. E_{2b} und E₁ bzw. E₁ₐ begrenzt ist,
- einen abfallenden Kurvenabschnitt (F_{f}), der durch die Punkte E₁ bzw. E_{1b} und E₃ bzw.
   E_{3b} begrenzt ist,
und wobei für die Mehrzahl der Segmente die Steilheit im ansteigenden Kurvenabschnitt (Fₛ) geringer ist als die Steilheit im abfallenden Kurvenabschnitt (F_{f}).

Als Steilheit eines bestimmten Kurvenabschnitts (eines bestimmten Abschnitts der Segment-Begrenzungskante) wird im Sinne dieser Schrift) der Betrag der Steigung einer Geraden durch die zwei den Kurvenabschnitt begrenzenden Kurvenpunkte verstanden.
Die Steilheit eines Kurvenabschnitts entspricht damit insbesondere mathematisch dem Mittelwert der ersten Ableitung des Kurvenabschnitts, soweit sich der Kurvenabschnitt als Riemann-Integral seiner ersten Ableitung darstellen lässt.

Durch die Form der Spaltsegmente wird die entsprechende Spaltkraft -abhängig vom Material- eingestellt. Die Form/Geometrie des jeweiligen Segments soll in Querrichtung des Klebebandes eine möglichst geringe Kraft zum Anspalten erfordern. Diese darf aber auch nicht zu gering sein, um in der Beschleunigungsphase des Ballens nicht zu früh zu öffnen und so zu einem Abriss zu führen. Dies gilt vor allem für gurtgetriebene Anlagen, bei denen im Bereich des Gurtes eine besondere Festigkeit erforderlich ist.

Daher ist es insbesondere vorteilhaft, die die Begrenzungskanten der Segmente quer zur Abrollrichtung des Klebebandes mit einer möglichst geringen Steilheit zu versehen, so dass die Anspaltneigung minimiert wird. Insbesondere kann dies erreicht werden, indem die Segmente auf der rechts liegenden Seite - der Seite, an der bei dem Splice-Vorgang das Trennen beginnt - spitz oder gerundet in Form eines Scheitels auszubilden. Es ist vorteilhaft, die Segmente dann fortlaufend von der rechten Seite breiter werden zu lassen, um insbesondere eine hinreichende Klebefläche zu schaffen.

Es ist insbesondere für die Lösung der Aufgabe vorteilhaft, wenn nicht nur der Betrag der mathematisch gemittelte Steigung des ansteigenden Kurvenabschnitts geringer ist als derjenige des abfallenden Kurvenabschnitts, sondern wenn für die Mehrzahl aller Segmente, insbesondere vorteilhaft für alle Segmente, gilt, dass
für eine Vielzahl der Kurvenpunkte eines ansteigenden Kurvenabschnitts der Betrag der Steigung der Kurve (also der Betrag des Wertes der Ableitung der Kurve in diesem Punkt) kleiner ist als der Betrag der Steigung (Betrag des Ableitungswertes) in dem Punkt mit demselben y-Wert des in Vorzugsrichtung nachfolgenden abfallenden Kurvenabschnitt.

Bevorzugt weisen eine Vielzahl der Segmente, besser die Mehrzahl der Segmente, noch besser alle Segmente im ansteigenden Kurvenabschnitt jeweils einen oder mehrere Teil-Kurvenabschnitte auf, für deren Kurvenpunkte jeweils gilt, dass dort der Betrag der Steigung der Kurve (also der Betrag des Wertes der Ableitung der Kurve in diesem Punkt) kleiner ist als der Betrag der Steigung (Betrag des Ableitungswertes) in dem Punkt mit demselben y-Wert des in Vorzugsrichtung nachfolgenden abfallenden Kurvenabschnitt.

Bevorzugt macht die Ausdehnung in y-Richtung - auch y-Ausdehnung genannt - des bzw. der Teil-Kurvenabschnitte insgesamt mindestens 50 %, besser 75 %, noch besser 90 % der y-Ausdehnung des ansteigenden Kurvenabschnitts bzw. des in Vorzugsrichtung nachfolgenden abfallenden Kurvenabschnitts aus, je nachdem welche dieser beiden y-Ausdehnungen die kleinere ist.
Noch mehr bevorzugt macht die y-Ausdehnung des bzw. der Teil-Kurvenabschnitte insgesamt mindestens 50 %, besser 75 %, noch besser 90 % der y-Ausdehnung des ansteigenden Kurvenabschnitts aus, selbst wenn dieser Kurvenabschnitt die kleinere y-Ausdehnung aufweist.

Die (mathematische) Beschreibung der die Segmentkanten darstellenden Kurve erfolgt vorteilhaft anhand des rechtshändischen, kartesischen (orthogonalen) Koordinatensystems, welches bezüglich des Klebebandes definiert ist.
Die x-Achse (Abszisse) dieses Koordinatensystems (Achsenkreuzes) verläuft in Längsrichtung des Klebebandes, die y-Achse (Ordinate) zeigt von der linken zur rechten Klebebandkante, und die z-Achse (Applikate) zeigt von der Oberseite zur Unterseite des Klebebandes (z-Richtung).
Diese Lage des Achsenkreuzes bietet sich an, da das Trennsystem bei Aufsicht auf die Unterseite des Klebebandes sichtbar ist und am besten aus diesem Blickwinkel beschrieben werden kann. Zur Darstellung ist in den Figuren das Koordinatensystem jeweils mit punktierten Linien eingezeichnet.

Die rechte Seite ist somit durch die positive y-Richtung des Koordinatensystems definiert. Die Vorzugsrichtung entspricht insbesondere der x-Richtung des vorgenannten Koordinatensystems.

Für die Mehrzahl der Segmente ist erfindungsgemäß vorgegeben, dass der ansteigende Kurvenabschnitt eine geringere Steilheit aufweist (flacher verläuft) als der abfallende Kurvenabschnitt. Sowohl für diese Segmente als somit auch für das Klebeband ist deshalb keine Spiegelachse zu finden, die parallel zu der y-Achse verläuft.
Bevorzugt gilt für über 50 %, mehr bevorzugt für mindestens 75 %, noch mehr bevorzugt für mindestens 90 % und am besten für alle Segmente, dass der ansteigende Kurvenabschnitt eine geringere Steilheit aufweist (flacher verläuft) als der folgende abfallende Kurvenabschnitt.

Insbesondere vorteilhaft ist es, wenn für über 50 %, bevorzugt für mindestens 75 %, mehr bevorzugt für mindestens 90 %, am besten für alle Segmente gilt, dass die Steilheit in dem abfallenden Kurvenabschnitt eines Segmentes höher ist als die Steilheit des ansteigenden Kurvenabschnitts des in der x-Richtung darauf folgenden Segments.

Die ansteigenden und/oder die abfallenden Kurvenabschnitte können so ausgestaltet sein, dass sie zumindest über einen Teilbereich linear oder im wesentlichen linear verlaufen; sie können aber auch - unabhängig voneinander - so ausgestaltet sein, dass sie einen oder mehrere Wendepunkte aufweisen.
Im Extremfall ist die Kurve so geformt, dass der abfallende Abschnitt senkrecht (parallel zur y-Achse) verläuft oder in einem oder mehreren Teilabschnitten senkrecht verläuft.

In einer ersten vorteilhaften Ausgestaltung der Erfindung steigen die ansteigenden Kurvenabschnitte monoton an und/oder fallen die abfallenden Kurvenabschnitte monoton ab, eine Weiterentwicklung dieser Variante zeichnet sich dadurch aus, dass die Kurvenabschnitte streng monoton ansteigen bzw. abfallen.

Eine weitere Variante der Erfindung ist derart gestaltet, dass die Abschnitte keine Monotonie im Verlauf aufweisen, so dass im ansteigenden Kurvenabschnitt und/oder im abfallenden Kurvenabschnitt lokale Maxima und Minima (und/oder lokale Maximumsbereiche und/oder Minimumsbereiche) auftreten. Der Erfindung ist aber dann genüge getan, wenn über die entsprechenden Kurvenabschnitte insgesamt ein Ansteigen bzw. Abfallen der erfindungsgemäß genannten Definition auftritt, wenn also über den jeweils betrachteten Kurvenabschnitt insgesamt ein Anstieg bzw. ein Abfall festzustellen ist und die Bedingung über deren Steilheitsverhältnisse erfüllt ist.

Auch Wende- und/oder Sattelpunkte sind im Verlauf der ansteigenden bzw. abfallenden Kurvenabschnitte möglich.

Der Kurvenverlauf durch den am weitesten rechts liegenden Punkt E₁ ("Extremwert") kann - in bevorzugter Weise - derart ausgebildet sein, dass die Kurve zumindest im Extremwertbereich differenzierbar ist, so dass der Verlauf durch den Extremwert durch einen "runden" Kurvenverlauf gekennzeichnet ist; er kann aber auch derart ausgebildet sein, dass die Kurve dort nicht differenzierbar ist, so dass im Extremwert eine Spitze vorliegt.

Auch der Übergang des ansteigenden Abschnitts in einen Extremwertbereich und/oder der Übergang eines Extremwertbereich in einen abfallenden Abschnitt kann jeweils durch einen differenzierbaren oder durch einen nicht differenzierbaren Kurvenverlauf gekennzeichnet sein. Für die Extremwertbereiche gilt, dass die ersten Ableitungen hier monoton, aber nicht streng monoton verlaufen (der Wert der ersten Ableitung ist Null für alle Punkte des Extremwertbereichs).

Auch der linke Bereich der Kurve (F) (Kurvenverlauf zwischen den Punkten E₂ und E₃ auf der linken Seite) kann insbesondere auch derart ausgebildet sein, dass er stets (also über den gesamten Verlauf in diesem Bereich) differenzierbar ist. Insbesondere vorteilhaft verläuft auch der Kurvenverlauf im Bereich der Punkte E₂ und E₃ gerundet; es kann dem entgegen hier aber auch jeweils oder in einem der beiden Punkte eine Spitze vorgesehen sein.

Zur näheren Erläuterung des erfindungsgemäßen Klebebandes dienen die folgenden Abbildungen, die die Erfindung lediglich schematisch darstellen sollen, aber bezüglich der einzelnen Ausführungsformen keine Einschränkungen bedeuten, wobei insbesondere die dort dargestellte Form der Segmente (S) des Trennsystems (TS) auf der Klebebandunterseite nur beispielhaft dargestellt ist:

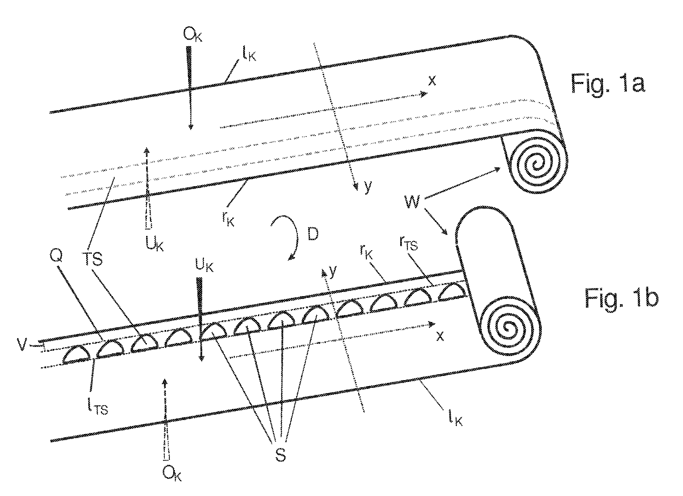

Figur 1a Aufsicht auf das Klebeband von oben,
Figur 1b Aufsicht auf das Klebeband von unten,

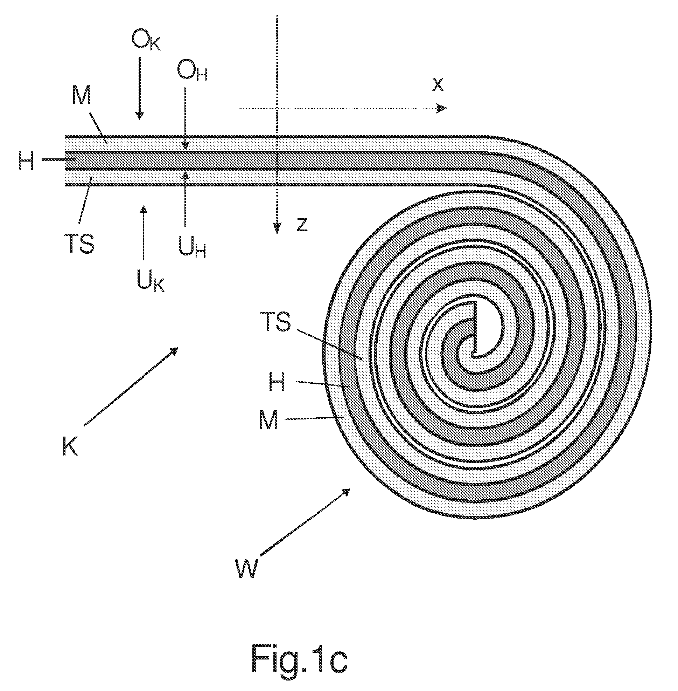

Figur 1c Querschnitt des Klebebandes in Längsrichtung (x-Richtung) und

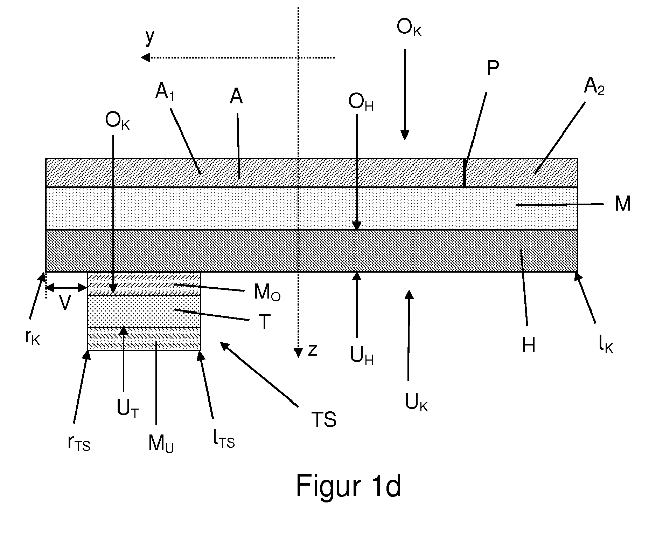

Figur 1d Querschnitt des Klebebandes in Querrichtung (y-Richtung).
Das Klebeband (K) umfasst zunächst einen Hauptträger (H), der auf seiner Oberseite (O_{H}) mit einer Selbstklebemasse (M) versehen ist (in den Figuren 1a und 1b nicht separat dargestellt). Die Oberseite (O_{K}) des Klebebandes (K) und die Oberseite (O_{H}) des Hautträgers (H) liegen dabei auf derselben Seite (oben); entsprechendes gilt für die Unterseiten (U_{K} , U_{H}) des Klebebandes (K) und des Hauptträgers (H) (jeweils unten) - vgl. hierzu Figur 1c.
Figur 1a zeigt eine Aufsicht auf ein solches Klebeband von oben, so dass die mit der Selbstklebemasse versehene Oberseite (O_{K}) des Klebebandes (K) in der Abbildung der Figur 1a oben liegt. Auf der Unterseite (U_{K}) des Klebebandes ist das Trennsystem (TS) aus einer Vielzahl von Segmenten (S) vorgesehen. In Figur 1a ist dieses Trennsystem (TS) linear gestrichelt und nur dem Verlauf nach schematisch dargestellt (insbesondere ist die Segmentierung nicht dargestellt), da es unterhalb des Klebebandes und somit im nicht sichtbaren Bereich liegt.
Das Klebeband kann zur Rolle (W) gewickelt werden, wobei die Oberseite (O_{K'}) des Klebebandes (K) die Außenseite einer jeweiligen Wicklung und die Unterseite (U_{K}) des Klebebandes (K) die Innenseite einer jeweiligen Wicklung darstellt (vgl. parallel auch Figur 1c). In der Figur 1c ist gezeigt, dass an der Oberseite (O_{K}) des Klebebandes (K) optional eine Abdeckung (A), insbesondere aus einem Trennmaterial, vorgesehen sein kann; die insbesondere dazu geeignet ist, das Klebeband handhaben zu können, insbesondere bei der Aufwicklung des Klebebandes eine Trennwirkung zwischen den einzelnen Klebebandlagen zu bewirken (in der Figur 1d ist diese Abdeckung (A) ebenfalls dargestellt). Die Abdeckung (A) besteht insbesondere aus einem silikonisierten Material, vorzugsweise aus silikonisiertem Papier.
Bezüglich des Klebebandes (K) ist weiterhin das einführend beschriebene kartesische (orthogonale) Koordinatenkreuz dargestellt, dessen x-Achse (Abszisse) in Längsrichtung des Klebebandes verläuft, wobei die Achse zur Rollenwicklung (W) zeigt (x-Richtung), dessen y-Achse (Ordinate) von der linken (l_{K}) Klebebandkante zur rechten (r_{K}) Klebebandkante zeigt (y-Richtung), und dessen z-Achse (Applikate) von der Oberseite (O_{K}) zur Unterseite (U_{K}) des Klebebandes (K) zeigt (z-Richtung).
Das Klebeband K besitzt eine linke Kante (I_{K}) und eine rechte Kante (r_{K}), die Bezeichnungen für die Kanten ergeben sich, wenn man auf die Oberseite (O_{K}) des Klebebandes (K) schaut, und zwar in Richtung der Rollenwicklung (W).
Da die Dimensionen des Klebebandes grundsätzlich (aber nicht zwingend) durch die Dimensionen des Hauptträgers bestimmt werden, entsprechen sich die linken und rechten Kanten (l_{K}, r_{K}) des Klebebandes (K) und des Hauptträgers (H) in der Regel.
Dreht man das Klebeband nun um 180 ° [Drehung (D)], so ergibt sich die Sicht in Figur 1b: Figur 1b zeigt die Sicht auf die Unterseite (U_{K}) des Klebebandes (K), so dass das Trennsystem (TS) nun sichtbar (oberhalb der Hauptträgerebene) liegt. Das Trennsystem wird durch zur x-Achse parallele Geraden (r_{TS}) auf der rechten Seite und (l_{TS}) auf der linken Seite begrenzt.
Ebenfalls oberhalb der Hauptträgerebene liegt in dieser Ansicht die Rollenwicklung (W).
Das Koordinatensystem entspricht dann der mathematisch vertrauten Darstellung.
Aus den Definitionen der Richtungen ergibt sich weiterhin, dass die Abrollrichtung des Klebebandes der x-Richtung entspricht, wenn man die Rollenwicklung abwickelt.
Figur 1d zeigt beispielhaft anhand einer willkürlich gewählten, nicht erfindungsbeschränkend zu verstehenden Ausführungsform einen Querschnitt eines erfindungsgemäßen Klebebandes, die Blickrichtung entspricht der positiven x-Richtung. Die Bezugszeichen entsprechen den bisherigen Definitionen. In der Figur 1d ist ebenfalls die optional vorhandene Abdeckung (A) dargestellt. Die Abdeckung kann mit einem Schnitt oder einer Sollbruchstelle (P), insbesondere in Form einer Perforation, eines Anschnitts, einer Schlitzung oder ähnlichem, der bzw. die in Längsrichtung des Klebebandes, also in x-Richtung und somit parallel zu den Klebeband-Längskanten (r_{K}, l_{K}) verläuft, in zwei Abschnitte (A₁) und (A₂) geteilt sein oder für eine mögliche Teilung vorbereitet sein.
Wird das Klebeband (K) in der Anwendung manuell verarbeitet, ist es vorteilhaft, wenn das Abdeckmaterial den Schnitt oder die Perforation (P) aufweist, so dass die entstehenden Teilstücke unabhängig voneinander abgezogen werden können. Das Abdeckmaterial kann aber auch ungeschlitzt vorliegen, insbesondere wenn das Klebeband später in einem automatischen oder automatisierten Prozess verklebt wird. Für die manuelle Verklebung ist das Abdeckmaterial vorzugsweise Papier, da es dann handeinreißbar ist. Insbesondere bei einer automatischen Applikation kann das Abdeckmaterial auch aus Folie bestehen, da in diesem Fall das Klebeband mit Abdeckung maschinell geschnitten wird. Aber auch in diesem Fall wird bevorzugt eine Abdeckung aus entsprechend behandeltem, insbesondere silikonisierten, Papier eingesetzt, da Folien - insbesondere aufgrund ihres hohen Dehnungsvermögens - zu Problemen beim Abschneiden des Klebebandes führen können.
Das unterklebte Trennsystem (TS) kann bündig an der rechten Längskante (r_{K}) des Klebebandes (K) angeordnet sein. Für den Einsatz der Erfindung im fliegenden Rollenwechsel hat es sich aber als sehr vorteilhaft herausgestellt, wenn das Trennsystem (TS) in einem Abstand (V) von dieser Längskante (r_{K}) angeordnet ist [der Abstand bezieht sich hier auf die Verbindungslinie der am weitesten rechts liegenden Extremwerte der jeweiligen Segmente, also die Trennsystem-Begrenzungsgerade (r_{TS})].
Es ist möglich und vom Erfindungsgegenstand mit umfasst, dass das erfindungsgemäße Klebeband - insbesondere zur Erfüllung bestimmter Funktionen wie beispielsweise einer Detektionsfunktion für eine maschinelle Prozessführung - weitere Schichten umfasst, die hier nicht dargestellt sind.
Der Aufbau des Trennsystems (TS) spielt für die schematische Darstellung des Querschnittes des Klebebandes (K) an dieser Stelle keine Rolle und soll daher hier ohne Belang bleiben, so kann das Trennsystem des erfindungsgemäßen Klebebandes einen anderen Aufbau besitzen als hier dargestellt. Die Figur 1d dient später der Beschreibung einer konkreten Ausführungsform, auf die sich an dieser Stelle bei der Erläuterung des allgemeinen Aufbaus der Erfindung explizit nicht eingeschränkt werden soll, die Bezugszeichen (O_{T}, U_{T}, M_{O}, T und M_{U}) werden zu diesem späteren Zeitpunkt erläutert.

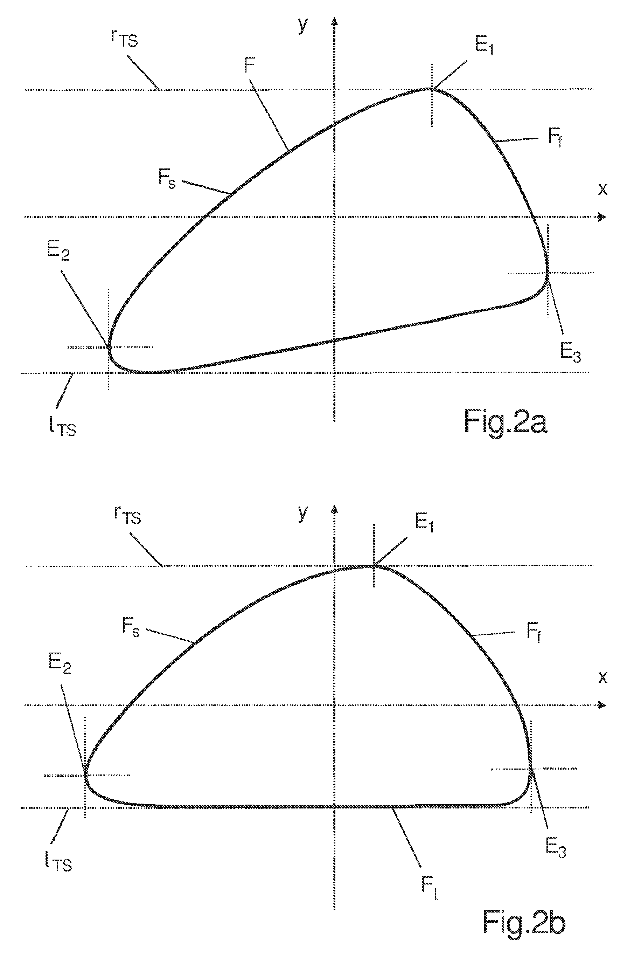

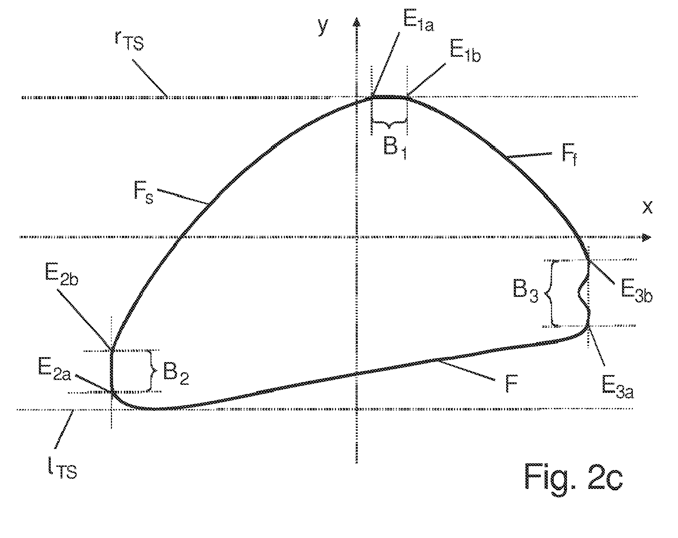

Die Figur 2a zeigt eine Ausführungsform eines Segmentes, wie es für eine solche Ausführungsform des erfindungsgemäßen Klebebands hervorragend in Frage kommt.
Die Kurve besitzt einen am weitesten rechts liegenden Punkt E₁(x₁/yₘₐₓ) ("Extremwert"), weiterhin einen am wenigsten weit in x-Richtung liegenden Scheitelpunkt E₂(xₘᵢₓ/y₂) sowie einen am weitesten in x-Richtung liegenden Scheitelpunkt E₃(xₘₐₓ/y₃). Durch die Punkte E₂ und E₁ wird ein ansteigender Kurvenabschnitt (Fₛ) begrenzt, durch die Punkte E₁ und E₃ ein abfallender Kurvenabschnitt (F_{f}). Die Steilheit im ansteigenden Kurvenabschnitt (Fₛ) ist geringer (der Kurvenabschnitt verläuft flacher) als die Steilheit im abfallenden Kurvenabschnitt (F_{f}) (hier verläuft der Kurvenabschnitt steiler).
Figur 2b zeigt eine Weiterentwicklung dieses Segmentes, hier verläuft der linksseitige Kurvenabschnitt Fₗ (zwischen den Scheitelpunkten E₂ und E₃) im Wesentlichen (also zumindest in Teilabschnitten) parallel zur x-Achse.
In einer bevorzugten Vorgehensweise, insbesondere für die zuletzt genannte Ausführungsvariante, besitzen die Punkte E₂ und E₃ dieselben y-Werte (so dass die Scheitelpunkte gleich weit von der x-Achse entfernt sind).
Eine weitere vorteilhafte Ausführungsform der Erfindung ist in Figur 2c dargestellt. Hier besitzt die Kurve einen eine Mehrzahl am weitesten rechts liegender Punkte umfassenden Extremwertbereich B₁, der durch die Punkte E₁ₐ(x₁ₐ/yₘₐₓ) und E_{1b}(x_{1b}/yₘₐₓ) begrenzt ist, wobei der Punkt E₁ₐ weniger weit in x-Richtung liegt als der Punkt E_{1b} (also x₁ₐ < x_{1b}), weiterhin einen eine Mehrzahl am wenigsten weit in x-Richtung liegender Punkte umfassenden Bereich B₂, der durch die Punkte E₂ₐ(xₘᵢₙ/y₂ₐ) und E_{2b}(xₘᵢₙ/y_{2b}) begrenzt ist, wobei der Punkt E₂, weiter links als der Punkt E_{2b} liegt (also y₂ₐ < y_{2b}), und weiterhin einen eine Mehrzahl am weitesten in x-Richtung liegender Punkte umfassenden Bereich B₃, der durch die Punkte E₃ₐ(xₘₐₓ/y₃ₐ) und E_{3b}(xₘₐₓ/y_{3b}) begrenzt ist, wobei der Punkt E₃ₐ weiter links als der Punkt E_{3b} liegt (also y₃ₐ < Y_{3b}).
Der ansteigende Kurvenabschnitt (Fₛ) wird in dieser Ausführungsvariante durch den am weitesten rechts liegenden Punkt E_{2b} des Bereichs B₂ und durch den am wenigsten weit in x-Richtung liegenden Punkt E₁ₐ des Extremwertbereicht B1 begrenzt. Der abfallende Kurvenabschnitt (F_{f}) wird durch den am weitesten in x-Richtung liegenden Punkt E_{1b} des Extremwertbereichs B₁ und durch den am weitesten rechts liegenden Punkt E_{3b} des Bereichs B₃ begrenzt. Auch hier gilt erfindungsgemäß, dass die Steilheit im ansteigenden Kurvenabschnitt (Fₛ) geringer ist als die Steilheit im abfallenden Kurvenabschnitt (F_{f}).
Wie in der Figur 2c anhand der Bereiche B₁ und B₂ dargestellt ist, können alle Punkte eines Bereichs B₁, B₂ und/oder B₃ am weitesten in y-Richtung (am weitesten rechts), am wenigsten weit in x-Richtung bzw. am weitesten in x-Richtung liegen, so dass die Punkte des jeweiligen Bereichs eine zur x-Achse bzw. zur y-Achse parallele Gerade darstellen,
wobei die Begrenzungspunkte diejenigen Punkte sind, deren einer Nachbar gerade nicht mehr am weitesten in die entsprechende Richtung liegt. Wie für den Bereich B₃ beispielhaft dargestellt ist, kann es aber auch innerhalb des Bereichs Punkte geben, die nicht am weitesten in die entsprechende Richtung liegen.

Unter die Erfindung fallen auch solche Kurven (F), in denen, ausgehend von Figur 2a, ein oder zwei der Punkte E₁, E₂ und/oder E₃ durch Bereiche B₁, B₂ bzw. B₃ substitiuert sind, also quasi "Mischgeometrien" der Ausführungsformen der Figuren 2a und 2c.
Auch in der Ausführungsform, wie sie in Figur 2b dargestellt ist, können ein oder zwei der Punkte E₁, E₂ und/oder E₃ durch Bereiche B₁, B₂ bzw. B₃ substitiuert sein.

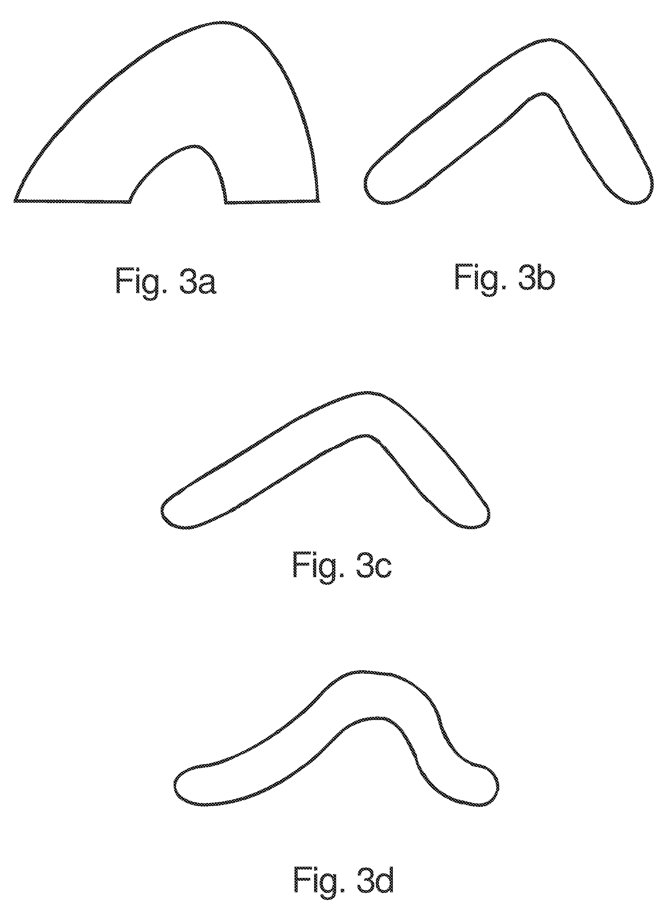

In den Figuren 3a bis 3d sind beispielhaft - ohne hiermit eine Einschränkung bezüglich des Erfindungsgegenstandes bewirken zu wollen - einige weitere Formen für Segmente gezeigt, die sich für das erfindungsgemäße Klebeband hervorragend eignen.

In einer vorteilhaften Ausführungsform stellt das Trennsystem eine Abfolge in x-Richtung jeweils identischer Segmente dar, also derart, dass die Schwerpunkte der Segmente auf einer Geraden (Basislinie (X)) liegen (hintereinander angeordnet sind). Sehr bevorzugt verläuft diese Basislinie in x-Richtung, es ist aber auch möglich, die Basislinie in einem insbesondere spitzen Winkel zur x-Achse verlaufen zu lassen, so dass das Trennsystem schräg auf dem Klebeband angeordnet ist.
Vorteilhaft ist es, zwischen den Segmenten auch identische Zwischenräume (Abstände zwischen den Segmenten) vorzusehen. Sehr bevorzugt sind die Zwischenräume zwischen den einzelnen Segmenten in x-Richtung jeweils kleiner ist als die Ausdehnung eines jeden Segments in x-Richtung.

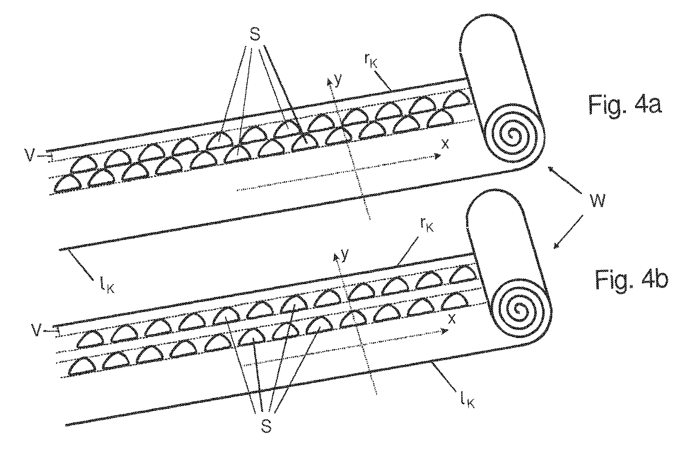

Das Trennsystem kann vorteilhaft auch in Form eines unterbrochenen Streifens aus Segmenten vorgesehen sein, deren Geometrie zwar jeweils identisch ist, bei denen die Anordnung der Segmente aber derart versetzt ist, dass ihre Schwerpunkte nicht auf einer einzigen Geraden, die sich in x-Richtung erstreckt, sondern auf zwei oder mehreren Geraden liegen.
Dabei lässt sich über die Form und die Größe der Segmente, den Abstand zwischen den Segmenten und die Lage der Trennsysteme zueinander (direkt angrenzend, Abstand zwischen den Trennsystemen...) und deren Zahl das Klebeverhalten des Klebebandes hervorragend justieren.
Insbesondere ist hier eine periodische Abfolge der Segmente und bevorzugt auch der Segmentzwischenräume vorteilhaft. Beispiele für eine derartige Anordnung sind in den Figuren 4a und 4b dargestellt, ohne sich durch die Geometrie der dort dargestellten Segmente unnötig beschränken zu wollen.

In einer bevorzugten Variante ist die Ausdehnung der einzelnen Segmente in x-Richtung um ein Mehrfaches geringer als die Ausdehnung des Klebebandes in x-Richtung.
Zusätzlich oder alternativ ist bevorzugt die Ausdehnung des durch die Segmente (S) gebildeten Streifens in Querrichtung des Klebebandes (K), also der y-Richtung, geringer als die Ausdehnung des Klebebandes (K) in diese Richtung (also geringer als die Breite des Klebebandes).

Eine Ausführungsform der Erfindung weist ein Trennsystem auf, bei dem die Segmente unterschiedliche Geometrien aufweisen. Hier können insbesondere zwei oder mehrere Gruppen jeweils identischer Segmente vorliegen, deren Schwerpunkte entweder alle auf einer Geraden, die sich in x-Richtung erstreckt, liegen. Es werden von der Erfindung wieder solche Ausführungen umfasst, bei denen die Schwerpunkte der Segmente nicht auf einer einzigen Geraden, die sich in x-Richtung erstreckt, sondern auf zwei oder mehreren Geraden liegen.
Dabei zeichnet sich eine sehr bevorzugte Ausführungsform dadurch aus, dass die Schwerpunkte geometrisch identischer Segmente jeweils auf einer sich in x-Richtung erstreckenden Geraden liegen,
Insbesondere sind auch hier wieder Trennsysteme mit einer periodischen Abfolge der Segmente vorteilhaft.

Der Hauptträger kann in bevorzugter Weise ein Papierträger sein. Wichtig an diesem Papier sind die physikalischen Eigenschaften, vornehmlich die Reißkraft. Diese soll höher als die Bahnspannungen in der Druckmaschine oder anderen Bearbeitungsmaschinen liegen. Insbesondere bei Maschinen mit geringeren Bahnspannungen kann das Papier auch dünner gewählt werden. Dieses hat Vorteile für den Verarbeitungsprozess, da dünnere Materialien den Maschinendurchlauf weniger stören.

### Beschaffenheit des Trennsystems auf der Unterseite des Klebebandes

Das Trennsystem (TS) auf der Unterseite des Klebebandes ist erfindungsgemäß dafür geeignet, eine Klebeverbindung zwischen dem Hauptträger und einem Substrat zu bewirken. Das Trennsystem ist derart gestaltet, dass es erlaubt, die durch das System bewirkte Klebeverbindung wieder zu trennen, ohne dass auf der Unterseite des Klebebandes noch auf dem Substrat im Bereich der getrennten Klebeverbindung klebende Rückstände verbleiben. Die Trennung erfolgt dabei flächig, also in z-Richtung (leichte Abweichungen von der z-Richtung aufgrund von prozessbedingten Ungenauigkeiten oder Dickenschwankungen und dergleichen seien mit umfasst und sollen der Bezeichnung "Trennung in z-Richtung" nicht entgegenstehen). Im Flächenbereich der gelösten Klebeverbindung sollen also weder auf Seiten des Klebebandes noch auf Seiten des Substrats klebende oder klebrige Flächen verbleiben.

Die Trennung der Klebefügung, ohne dass auf der Unterseite des Klebebandes noch auf dem Substrat im Bereich der getrennten Klebeverbindung klebende Rückstände verbleiben, umfasst dabei insbesondere einen (flächigen) Spaltvorgang innerhalb des Trennsystems (insbesondere das flächige Spalten einer einlagigen oder einstückigen Schicht des Trennsystems), ein Delaminieren zweier aufeinander laminierter Schichten des Systems oder das Wiederablösen einer der Schichten des Trennsystems von dem Substrat, auf welchem das Trennsystem verklebt war, und/oder das Wiederablösen einer der Schichten des Trennsystems von einer anderen Schicht des erfindungsgemäßen Klebebandes.

In einer Ausgestaltung des Trennsystems, wie sie veranschaulichend in Figur 1d dargestellt ist, wird dieses dadurch bewirkt, dass das Trennsystem (TS) selbst in Form eines doppelseitigen Klebebandes ausgestaltet ist, welches seinerseits einen Träger (T) - auch als "Segmentträger" oder "spaltfähiger Träger" bezeichnet - aufweist, der auf seiner Oberseite (O_{T}) und auf seiner Unterseite (U_{T}) jeweils mit einer Schicht einer Klebemasse (M_{O}, M_{U}) versehen ist.
Der Segmentträger ist in einer ersten Ausgestaltungsform ein einstückiger (einlagiger) Träger, der sich bei Einwirkung entsprechender Kräfte flächig spalten lässt. Die Klebeverbindung mittels dieses Trennsystems lässt sich dann wieder trennen, indem der Segmentträger flächig in z-Richtung spaltet; insbesondere im wesentlichen bezüglich der Segmentträgerfläche mittig spaltet, die jeweiligen Klebemassenschichten sind durch die nach der Spaltung verbleibenden flächigen Reste des Segmentträgers nichtklebend abgedeckt.
Der Segmentträger kann auch mehrlagig aufgebaut sein, wobei eine der Trägerschichten spaltfähig ist.
Als "spaltfähig" werden im Rahmen dieser Schrift entsprechend solche Träger bezeichnet, die parallel zu ihrer Flächenausdehnung spaltbar sind, und insbesondere solche Träger, die bezogen auf die Anforderungen in einem Splice-Verfahren auch tatsächlich spalten. "Im wesentlichen mittige Spaltung" bedeutet im Sinne dieser Erfindung, dass bei der Spaltung etwa gleich dicke, flächige Trägerreste als Spaltprodukte entstehen; im Gegensatz zu einer im wesentlichen nicht mittigen Spaltung, bei denen deutlich unterschiedlich dicke (flächige) Trägerreste als Spaltprodukte entstehen. Insbesondere soll eine im wesentlichen mittige Spaltung des einstückigen Trägers dadurch gekennzeichnet sein, dass die Spaltprodukte die entsprechenden Klebemassen zuverlässig nichtklebend abdecken. Bei einer unsymmetrischen Spaltung wäre dies auf Seiten des zu dünnen flächigen Trägerrestes gegebenenfalls nicht gewährleistet).

Als spaltfähiger Träger kommen alle spaltfähigen flächigen Trägermaterialien in Frage, insbesondere leicht spaltende Papiere, Kraftpapiere, Papierverbundsysteme (beispielsweise Duplexpapiere und geleimte Papiersysteme), Folienverbundsysteme (beispielsweise geleimte Foliensysteme), polymere Verbundsysteme (beispielsweise coextrudierte polymere Verbundsysteme) und polymere Vliesstoffe.

Vorteilhaft wird ein spaltfähiger Träger eingesetzt, welcher eine deutlich geringere Spaltfestigkeit als ein Träger aufweist, welcher Zugkräfte aufnehmen muss. Insbesondere bevorzugt wird ein spaltfähiger Träger verwendet, der einen deutlich geringen Weiterreißwiderstand aufweist als ein Träger oder eine Trägerschicht, die die eigentlichen Zugkräfte in der Hauptebene des Klebebands (also als der Hauptträger H) aufnimmt, um die beiden Materialbahnen miteinander zu verbinden. Somit wird der Segmentträger aufgespalten, bevor der Hauptträger zerstört wird. Das oder die spaltfähigen Systeme basieren bevorzugt auf Papier. Hierfür kommen beispielsweise insbesondere folgende Papiere oder Papierverbundsysteme in Frage:
- Geleimte hochverdichtete Papiere
- Leicht spaltbare Papiersysteme, z. B. nicht nassfeste Papiere
- Kraftpapiere (beispielsweise beidseitig glatte Kraftpapiere - insbesondere geeignet gezeigt hat sich ein Kraftpapier von 55 µm Dicke und einem Flächengewicht von 65 g/m²)
- Duplexpapiere
   (definiert zusammenlaminierte Papiere, der Spaltvorgang verläuft extrem homogen; es entstehen keine Spannungsspitzen, z. B. durch inhomogene Verdichtung. Diese Papiere werden zur Herstellung von Tapeten und Filtern eingesetzt.)
- Spaltfähige Systeme, bei welchen die Spaltkräfte über die Größe der Verklebungspunkte bestimmt werden; solche spaltfähigen Systeme werden beispielsweise in der DE 198 41 609 A1 beschrieben.

Die obere Klebemasse und die untere Klebemasse des Trennsystems sollten eine hohe Klebkraft aufweisen. Insbesondere ist es vorteilhaft, wenn die Klebkräfte dieser Selbstklebemassen auf den jeweiligen Oberflächen (Träger und Substrat) größer ausfallen als die für ein Spalten des spaltfähigen Trägers erforderliche Kraft. Vorteilhafte spaltfähige Träger weisen bevorzugt Spaltfestigkeiten von 15 bis 70 cN/cm, insbesondere von 22 bis 60 cN/cm, ganz besonders von 25 bis 50 cN/cm auf. Zur Spaltfestigkeit und ihrer Messung wird auf die DE 199 02 179 A1 verwiesen.

Eine Variante dieser Ausführungsform des Klebebandes ist dadurch gegeben, dass der Träger (T) des Trennsystems nicht einlagig und flächig spaltbar, sondern in Form zweier flächig (in z-Richtung) voneinander lösbarer (delaminierbarer) Schichten ausgestaltet ist. Dies können insbesondere Papier-Papier- oder Folien-Folien-Laminate oder auch ein Laminat von Papier mit Folie sein. Hierfür kommen beispielsweise insbesondere folgende Laminat- oder Verbundsysteme auf Papier- und/oder Folienbasis in Frage:
- Duplexpapiere
   (definiert zusammenlaminierte Papiere, der Spaltvorgang verläuft extrem homogen; es entstehen keine Spannungsspitzen, z. B. durch inhomogene Verdichtung. Diese Papiere werden zur Herstellung von Tapeten und Filtern eingesetzt.)
- Spaltfähige Systeme, bei welchen die Spaltkräfte über die Größe der Verklebungspunkte bestimmt werden; solche Systeme werden beispielsweise in der DE 198 41 609 A1 beschrieben.
Insbesondere für repulpierbare Klebebänder ist ein Laminat zweier Papiere vorteilhaft. Beispiele für derartige Papierlaminate sind
- definiert zusammengeleimte hochverdichtete Papiere (insbesondere Papiere mit einer hohen Spaltfestigkeit). Die Leimung kann beispielsweise mit Stärke, stärkehaltigen Derivaten, Tapetenkleister auf Basis von Methylcellulose (tesa® Kleister, tesa AG, Hamburg; Methylan®, Henkel KgaA, Düsseldorf) oder auch auf Basis von Polyvinylalkoholderivaten erfolgen. Beschrieben werden solche Laminat-Systeme beispielsweise in der EP 0 757 657 A1.
Das Laminat kann auch ein solches zweier Polymerschichten, einer Polymerschicht mit Papier oder einer Polymerschicht mit Folie ausgestaltet sein, wobei das Polymer insbesondere ein solches ist, das sich durch Drucktechnik, wie etwa Tiefdruck, Siebdruck oder dergleichen, aufbringen lässt. Für das Polymer kommen hier insbesondere aushärtende Polymermassen in Frage, aber auch lösemittelhaltige Massen, denen nach der Aufbringung das Lösemittel entzogen wird, wobei die Schicht entsteht, weiterhin auch Polymermassen, die im erwärmten Zustand erweichen, also hinreichende Viskosität aufweisen, um aufgebracht werden zu können, bei Anwendungstemperatur aber als hinreichend stabile Schicht vorliegen.

Die Klebeverbindung mittels eines solchen Trennsystems lässt sich dann wieder trennen, indem sich die beiden Schichten des Segmentträgers flächig voneinander lösen (delaminieren); die jeweiligen Klebemassenschichten sind durch die nach der Trennung verbleibenden flächigen Schichten des Segmentträgers nichtklebend abgedeckt.

Umfasst werden von dieser Ausführungsvariante aber auch alle anderen Klebebänder, bei denen der Träger (T) aus anderen Materialien zweischichtig trennbar aufgebaut ist, wobei die Trägermaterialien insbesondere auf die jeweilige Anwendung abgestimmt sind. Der Kerngedanke eines derartigen Trennsystems besteht darin, dass der Spaltvorgang des spaltbaren Systems zwischen zwei voneinander trennbaren Schichten stattfindet und nicht innerhalb einer Schicht. Somit werden beispielsweise aus einem Papierträger keine Fasern herausgerissen und die notwendige Kraft zum Trennen der Schichten kann exakt definiert werden. Ebenso tritt durch eine längere Lagerung des Klebebands keine wesentliche Änderung der zum Trennen der Schichten notwendigen Kräfte auf. Die Art der Verbindung der beiden Schichten kann in beliebiger Weise oder bevorzugt wie im Folgenden beschrieben ausgeführt sein. Bevorzugt wird auch hier ein Laminat-Segmentträger verwendet, der einen deutlich geringeren "Weiterreißwiderstand" (bezogen auf den Delaminierungsvorgang) aufweist als ein Träger oder eine Trägerschicht, die die eigentlichen Zugkräfte in der Hauptebene des Klebebands (also als der Hauptträger) aufnimmt, um die beiden Materialbahnen miteinander zu verbinden. Somit kann das Trennsystem delaminieren, bevor der Hauptträger oder eine der Segmentträgerschichten zerstört wird. Das Trennsystem besteht hierbei also aus zumindest zwei Schichten, die sich unter einer definierten Krafteinwirkung, die beim fliegenden Rollenwechsel überschritten wird, delaminieren, also voneinander trennen. Beispiele hierfür sind koextrudierte Folien.
Die Trennfestigkeit des Laminats bzw. der Zwei-Trägerschichten-Systeme weist dabei insbesondere die Zahlenwerte auf, wie sie oben für die Spaltfestigkeit des flächig spaltenden, einstückigen Trägers angegeben sind.

Der Vorteil eines wie vorstehend beschrieben Trennsystems besteht darin, dass die notwendige Kraft zum Trennen des Trennsystems stets konstant bleibt, so dass ein fliegender Rollenwechsel unter kontrollierten Bedingungen ausführbar ist und eine Fehlfunktion des Klebebands vermieden wird.

Die beiden trennbaren Schichten können beispielsweise aufgrund von Adhäsionskräften aneinander haften. Hierbei können die beiden Schichten aus an sich beliebigen Materialien bestehen, wobei aufgrund der jeweiligen Materialeigenschaften unterschiedlich starke Adhäsionskräfte zwischen den Schichten wirken. Es ist dem Fachmann möglich, geeignete Materialien auszuwählen, um zwischen den Schichten eine definierte Adhäsionskraft zu erhalten. Wird das Klebeband in Normalrichtung, d. h. im Wesentlichen senkrecht zur Hauptebene des Klebebands, mit einer Kraft beaufschlagt trennen sich die beiden Schichten voneinander, sobald diese Kraft größer ist als die Adhäsionskraft. Nach dem Spalten bedeckt jeweils eine der Schichten die Selbstklebemassen, so dass diese in nicht klebender Weise abgedeckt sind. Dadurch ist gewährleistet, dass die beiden Schichten mit definierter und zeitlich konstanter Kraft voneinander getrennt werden können. Da die beiden Schichten aufgrund von Adhäsionskräften aneinander haften kann auf eine zusätzliche Klebeschicht verzichtet und somit die Gesamtdicke des Klebebands verringert werden.

In einer weiteren Ausgestaltung des Trennsystems weist dieses auf seiner Ober- oder auf seiner Unterseite eine Klebemasse (wiederlösbare Systemklebemasse) auf, die zur Verklebung auf dem Substrat dient. In der einfachsten Form dieser Ausgestaltung stellt die wiederlösbare Klebemasssenschicht selbst (allein) das System dar. Ein solches System kann aber auch mehrschichtig aufgebaut sein, etwa mit einem Träger und einer weiteren Klebemassenschicht auf der anderen Seite des Trägers (die ebenfalls eine wiederlösbare (Selbst-)Klebemasse sein kann).
In dieser Ausführungsform ist die wiederlösbare Systemklebemassenschicht derart, dass sie nach der Verklebung aushärtet oder in anderer Weise ihre Klebeeigenschaften verliert, so dass zwar die Klebefügung zunächst erhalten bleibt, nach der Wiederablösung vom Untergrund die Klebemassenschicht aber nicht mehr klebrig vorliegt (als Klebemassen in diesem Sinne werden also alle Massen, insbesondere Polymermassen bezeichnet, die zunächst eine Klebewirkung bewirken, nachdem aber in nichtklebenden und/oder nichtklebriger Form vorliegen können). Die wiederlösbare Systemklebemasse kann dabei auf der Oberseite des Trennsystems vorgesehen sein, so dass die Lösung der Klebeverbindung insbesondere auf Seiten des Klebeband-Körpers (insbesondere also zu dessen Hauptträger) geschieht, die wiederlösbare Selbstklebemasse kann aber auch auf der Unterseite des Trennsystems vorgesehen sein, so dass die Lösung der Klebeverbindung auf Seiten des Substrats geschieht. Im ersten Fall verbleibt das System ohne offenliegende Klebeflächen auf dem Substrat, im zweiten Fall auf dem Klebeband (besteht das Trennsystem lediglich aus der wiederlösbaren Systemklebemasse oder weist das Trennsystem sowohl oben als auch unten eine wiederlösbare Systemklebemasse auf, so hängt der Ort der Trennung davon ab, ob die Klebkraft zum Hauptträger oder zum Substrat stärker ist). Nach dem Löseprozess liegen beide Oberflächen im Bereich der gelösten Verklebungsfläche in nicht klebriger Form vor.

Im Falle eines mehrschichtigen Systems, welches neben der Systemklebemasse eine weitere - insbesondere nichtwiederlösbare - Klebemassenschicht aufweist, vermag diese weitere Klebemassenschicht eine dauerhafte Klebeverbindung zum Substrat zu vermitteln, wenn die Ablösung der Systemklebemasse auf der Klebebandseite geschieht, beziehungsweise zum Klebeband, wenn die Ablösung der Systemklebemassenschicht auf der Substratseite geschieht.
Für eine derartige Systemklebemasse sind beispielsweise aushärtende Klebemassen, aushärtende Lacke, Polymere (insbesondere härtende Polymere) und dergleichen geeignet, weiterhin insbesondere auch hitzeaktivierbare Klebemassen, die bei Raumtemperatur (Anwendungstemperatur) nichtklebrig sind und mit denen der Verklebeprozess in der Wärme realisiert wird.

Die wiederlösbare Klebemasse des Systems kann dabei vollflächig auf den Segmentträger, die Hauptträger (H) bzw. den jeweiligen Untergrund aufgebracht sein, erfindungsgemäß kann diese Klebemasse aber auch nur teilflächig aufgebracht sein. Vorteilhaft kann die wiederlösbare Klebemasse in Drucktechnik aufgebracht ist, insbesondere durch Siebdruck oder durch Tiefdruck.

Eine weitere Ausführungsform des erfindungsgemäßen Klebebandes besteht darin, dass eine wiederlösbare Klebemasse, wie sie vorstehend beschrieben ist, in Form des Trennsystems auf die Unterseite des Hauptträgers aufgebracht ist, insbesondere durch eine der vorgenannten Techniken.

Bei einer hervorragenden Variante des Klebebandes liegen zwei Schichten der gleichen oder unterschiedlicher wiederlösbarer Klebemassen vor, die unter den genannten Anforderungsbedingungen delaminierbar sind. Das Trennsystem kann insbesondere in Form eines Gebildes ausgestaltet sein, dass nur diese Klebemassenschichten allein umfasst; Trennsysteme mit solchen Massenschichten-Laminaten können aber auch weitere Schichten umfassen.

Erfindungsgemäß können auch mehrere Trennsysteme über die Breite des Klebebandes auf dessen Unterseite verteilt liegen.
Dies hat zum einen den Vorteil, dass die Verklebungsfläche des Klebebandes erhöht wird, zum anderen wird die Spaltfestigkeit des Verbundes erhöht. Hier kann auch das Aufbringen von unterschiedlichen Streifengeometrien sinnvoll sein.

Bei mehreren Trennsystemen auf dem Klebeband können diese aus dem gleichen Material bestehen und somit gleiche Spaltkräfte aufweisen, es kann aber auch von Vorteil sein, die Trennsysteme aus unterschiedlichem Material vorzusehen, so dass diese unterschiedliche Spaltkräfte besitzen.
Die zweiten und gegebenenfalls weiteren Trennsysteme auf der Klebeband-Unterseite können wie das erste Trennsystem bevorzugt erfindungsgemäß geformt sein, insbesondere also auch segemnetiert, aber auch andere Geometrien aufweisen, im einfachsten Fall einen geradlinigen Streifen, wie er aus dem Stand der Technik bekannt ist.

Insbesondere für den Einsatz in der papierverarbeitenden Industrie ist es von Vorteil, wenn einige, besser die meisten, noch besser alle im Prozess zum Einsatz kommenden Bestandteile des erfindungsgemäßen Klebebandes repulpierbar, also insbesondere wasserlöslich oder dispergierbar sind.

Als Klebemassen, insbesondere Selbstklebemassen, im Sinne der Klebemassenschichten (M, M_{O}, M_{U}) des erfindungsgemäßen Klebebandes (K) können - bezüglich der einzelnen Schichten unabhängig voneinander wählbar - hervorragend unter anderem Acrylate (wasserlösliche und/oder nichtwasserlösliche), Naturkautschukmasssen, Synthesekautschukmassen, Mischungen der vorgenannten Massen, Massen auf Basis von Copolymneren und/oder Blockcopolymeren, insbesondere auf Basis von Acrylaten und/oder Naturkautschuken und/oder Synthesekautschuken und/oder Styrol eingesetzt werden. Insbesondere können vorteilhaft Dispersionen, heißschmelzende (auch heißschmelzverarbeitbare) Klebemassen und/oder Klebemassen auf Lösungsmittelbasis eingesetzt werden. Die Auswahl der Klebemassen erfolgt dabei in Hinblick auf den jeweils bestimmten Einsatzbereich des erfindungsgemäßen Klebebandes (insbesondere fliegender Rollenwechsel, statischer Rollenwechsel, Rollenendverklebung usw.).

Insbesondere sowohl die Klebmasse (M_{O}) zum Segmentträger (T) als auch die Klebmasse (M_{U}), die später auf das zu spleißende Substrat gebracht wird, können Selbstklebmassen sein, können aber auch aushärtende Klebmassen sein.
Aushärtende Klebmassen zum Träger haben den Vorteil, dass sie in geringeren Schichtdicken aufgebracht werden können und somit die Dicke des Gesamtsystems reduzieren. Aushärtende Klebmassen im Sinne der Klebemasse (M_{U}) auf der Seite, die auf das zu spleißende Substrat gebracht wird, bieten den Vorteil, dass besonders schwierige Verklebungsuntergründe sicher verklebt werden. Derartige Klebmassen werden z.B. durch Wasser oder andere Lösungsmittel oder Wärme aktiviert. Zwar wird beim Einsatz dieser Klebmassen mehr Zeit benötigt, die Klebmasse muss in der Regel aktiviert werden, das Klebeband appliziert und danach die Klebmasse aushärten, allerdings lässt sich das in den heutigen Produktionszyklen üblicherweise gut realisieren, da häufig mit zentraler Splicevorbereitung gearbeitet wird. Dabei werden die zu spleißenden Rollen in der Regel 6 bis 8 Stunden im Voraus vorbereitet.

Insbesondere vorteilhaft ist es, besonders scherfeste (Selbst-)Klebemassen einzusetzen; auch die weiteren die Klebeeigenschaften bestimmenden Größen wie Tack (Anfassklebrigkeit), Kohäsion, Viskosität, Vernetzungsgrad etc. sollten erfindungsgemäß auf den jeweiligen Verwendungszweck optimiert werden, was nach den dem Fachmann geläufigen Verfahren geschehen kann. Es sei darauf verwiesen, dass prinzipiell alle Basistypen von Haftklebemassen, welche die erfinderischen Kriterien erfüllen, eingesetzt werden können.

In einer weiteren vorteilhaften Ausgestaltung des erfindungsgemäßen Klebebandes ist das Klebeband zusätzlich mit einer detektierbaren Schicht versehen und/oder ist zumindest eine der bereits beschriebenen Schichten mit einem detektierbaren Merkmal versehen. Hierdurch kann eine Detektion des Klebebandes durch geeignete Detektierapparaturen während des (Splice-)Prozesses bewirkt werden. Insbesondere kann hierdurch eine automatisierte Steuerung des Prozesses erzielt werden. Bei geeigneter Wahl des detektierbaren Merkmals können durch dieses auch zusätzliche Informationen (über eine Ja/Nein-Information hinaus) übertragen werden.
Die Detektion der Schicht erfolgt vorzugsweise optisch und/oder elektromagnetisch. Beispielsweise kann eine der Schichten mit einem optisch erkennbaren Muster versehen sein, das mit Hilfe geeigneter Sensoren beim Durchlauf durch die Maschine feststellbar ist. In gleicher Weise kann eine der Schichten ein elektromagnetisch detektierbares Merkmal enthalten, beispielsweise eine Metallisierung, die mit Hilfe eines elektromagnetischen Sensors feststellbar ist. Aufgrund der Detektierbarkeit zumindest einer der Schichten wird beispielsweise beim Beschleunigen einer Papierrolle, die mit einem derartigen Klebeband versehen ist, das Klebeband detektiert und somit der Splice-oder Verbindungsvorgang mit dem Bahnende der alten Rolle zum richtigen Zeitpunkt ausgelöst. Des Weiteren kann bei der Weiterverarbeitung der Papierbahn in einer sogenannten Makulaturweiche das Klebeband detektiert werden, um diesen Abschnitt mit der Spliceverbindung auszusondern. Somit übernimmt das Klebeband die Funktion bisher zusätzlich aufgebrachter Etiketten oder Markierungen, die im Stand der Technik manuell an einer Rolle eines bahnförmigen Materials angebracht wurden, was häufig zu Fehlfunktionen führte, da das Etikett an einer falschen Stelle angebracht wurde. Somit ist gewährleistet, dass aufgrund der Detektierbarkeit des Klebebands die genaue Position der Verklebung automatisch feststellbar ist und das Abschneiden bzw. Aussondern dieser Verbindung stets an der richtigen Stelle selbsttätig automatisch erfolgen kann. Mit diesem detektierbaren Klebeband ist es auch möglich, aufgrund der Rotationsgeschwindigkeit der Rolle Informationen über den Prozessablauf zu erhalten, da aus der Bewegung des Klebebands beispielsweise unmittelbar auf die Transportgeschwindigkeit der Bahn geschlossen werden kann.
In einfacher Weise ist die detektierbare Schicht eine Metallfolie, insbesondere Aluminium. Die detektierbare Schicht, beispielsweise eine Aluminiumfolie, weist beispielsweise eine Dicke von 6 bis 12 µm auf. Ebenso ist es möglich, dass die detektierbare Schicht eine Papierfolie ist, die mit einer Metallisierung bzw. metallischen Anteilen versehen ist. Ist eine der Schichten eine Metallfolie, wird die andere Schicht bevorzugt in Form einer Acrylatdispersion, Polymethylmethacrylat (PMMA), Latex, Polyvinylacrylat (PVA), Polyvibylchlorid (PVC) bzw. als Copolymer dieser Stoffe ausgeführt. Mit diesen Stoffkombinationen können die vorstehend genannten Weiterreißwiderstände in gewünschter Weise definiert eingestellt werden. Dabei treten auch bei längerer Lagerung des Klebebands keine Veränderungen dieser Festigkeitswerte auf, da die Adhäsionskräfte zwischen diesen Materialien unverändert bleiben. Es versteht sich, dass sowohl die Metallfolie als auch die weitere Schicht jeweils an ihren Außenseiten mit einer Selbstklebemasse versehen sind. Diese Selbstklebemasse ist vorzugsweise eine wasserlösliche oder wasserunlösliche Acrylat-Selbstklebemasse. In gleicher Weise können beispielsweise Natur- und Synthesekautschukmassen als auch Dispersionen der vorstehend beschriebenen Verbindungen verwendet werden.
Weiterhin kann es vorteilhaft sein, dass die detektierbare Schicht ihrerseits auf einen Träger aufgebracht ist. Dabei ist die detektierbare Schicht auf einer Seite des Trägers angeordnet und die zugehörige Selbstklebemasse auf der anderen Seite des Trägers. Der Träger kann aus Papier oder einer Folie bestehen. Der Träger kann unter anderem ein glattes, weißes, gebleichtes Kraftpapier sein.

### Beschaffenheit und Dimensionen des Klebebandes

Alle (Dimensions-)Angaben im folgenden gelten unabhängig von der tatsächlichen Kurvenform der Kurve F; auch dann, wenn sich zur Veranschaulichung der Werte auf eine der Figuren und die darin gezeigte Ausführungsform bezogen wird. Die angegebenen Werte gelten dann insbesondere vorteilhaft für die dargestellte Ausführungsform, sollen aber nicht hierauf beschränkt sein.

Sehr vorteilhaft beträgt ist Breite des Trennsystems auf der Unterseite des Klebebandes (also die Ausdehnung in y-Richtung), gemessen von den am weitesten nach rechts ragenden vorspringenden Kantenbereichen der rechten Trennsystem-Begrenzungskante (r_{TS}) bis zur linken Trennsystem-Begrenzungskante (l_{TS}), bzw. wenn diese Kante nicht gradlinig verläuft bis zu den am weitesten nach nach links vorspringenden Kantenbereichen der linken Trennsystem-Begrenzungskante (l_{TS}) geringer als die Breite des Klebebandes (K), also dessen Ausdehnung in y-Richtung.
In einer bevorzugten Vorgehensweise ist das Klebeband mindestens doppelt so breit wie das Trennsystem auf seiner Unterseite, bezogen auf die vorstehenden Breite-Begriffe.

Die Breite des Klebebandes (der Abstand in y-Richtung zwischen der rechten (r_{K}) und der linken (l_{K}) Klebeband-Begrenzungskante) beträgt vorteilhaft zwischen 30 und 120 mm, mehr bevorzugt zwischen 40 und 80 mm, ganz besonders bevorzugt 50 mm.

Die Ausdehnung der Segmente in y-Richtung liegt bevorzugt in einem Bereich von 5 bis 30 mm, bevorzugt von 10 bis 20 mm, sehr bevorzugt bei 15 mm.

Der Abstand in der Richtung senkrecht zur Basislinie (X) zwischen der rechten Begrenzungsgeraden r_{TS} des Trennsystems, und der linken Begrenzungsgeraden (l_{S}] des Trennsystems, also die Breite des Trennsystems, beträgt bevorzugt bis zu 40 mm, besonders zwischen 20 und 30 mm, ganz besonders bevorzugt zwischen 15 und 25 mm. Bei einem Trennsystem, bei dem nur identische Segmente auf einer Basislinie liegen, beträgt die bevorzugte Ausdehnung in y-Richtung 15 mm entsprechend der y-Ausdehnung der einzelnen Segmente.

In vorteilhafter Weise liegt das Verhältnis der Ausdehnung der ansteigenden Kurvenabschnitte (Bezugszeichen "Fₛ" in den Figuren") in x-Richtung zur Ausdehnung der abfallenden Kurvenabschnitte (Bezugszeichen "F_{f}" in den Figuren) in x-Richtung in den Grenzen von 10:1 bis (1,25):1, bevorzugt in den Grenzen von 7:1 bis (1,5):1, und ganz bevorzugt in den Grenzen von 5:1 bis 2:1.
Sehr vorteilhaft ist es, wenn die Ausdehnung der ansteigenden Kurvenabschnitte (Bezugszeichen "Fₛ" in den Figuren") in x-Richtung 10 bis 40 mm, bevorzugt 15 bis 30 mm, ganz bevorzugt 20 bis 25 mm beträgt.
Weiter bevorzugt beträgt die Ausdehnung der abfallenden Kurvenabschnitte (Bezugszeichen "F_{f}" in den Figuren) in x-Richtung 5 bis 30 mm, bevorzugt 8 bis 20 mm, ganz bevorzugt 10 bis 12,5 mm.

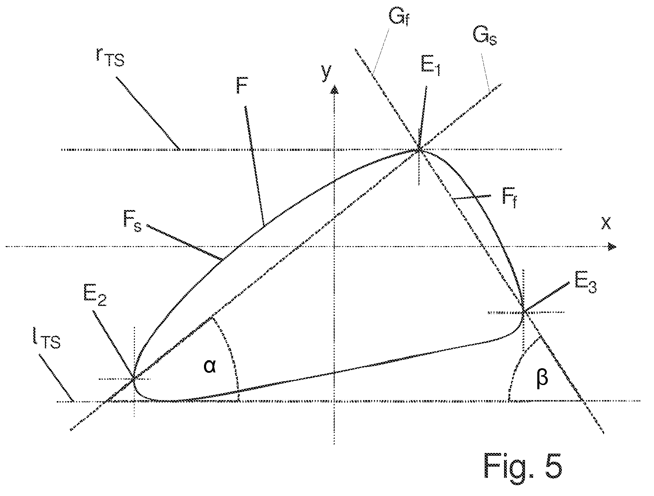

Die Steilheiten des ansteigenden Kurvenabschnitts und des abfallenden Kurvenabschnitts sind unabhängig voneinander bevorzugt wie folgt dimensioniert (vgl. zur Veranschaulichung die Figur 5, ohne sich durch die dort dargestellte Kurvenform hinsichtlich der Allgemeinheit der nachfolgenden Angaben einschränken zu wollen):
Der von der ausgleichenden Gerade (Gₛ) im ansteigenden Kurvenabschnitt (Fₛ) der Kurve (F) [Gerade, deren Steigung dem Betrag des arithmetischen Mittels über die Werte der ersten Ableitung der Kurve (F) in jedem Punkt im ansteigenden Kurvenabschnitt (Fₛ) entspricht] und der x-Achse eingeschlossene spitze Winkel (α) beträgt bevorzugt bis zu 45 °, insbesondere zwischen 18 ° und 40 °, ganz besonders zwischen 30 ° und 35 °, am besten 33 °.
Der von der ausgleichenden Geraden (G_{f}) im abfallenden Kurvenabschnitt (F_{f}) der Kurve (F) [Gerade, deren Steigung dem Betrag des arithmetischen Mittels über die Werte der ersten Ableitung der Kurve (F) in jedem Punkt im ansteigenden Kurvenabschnitt (F_{f}) entspricht] und der x-Achse eingeschlossenen spitze Winkel (β) ist größer als der von der Gerade (Gₛ) im ansteigenden Kurvenabschnitt (Fₛ) der Kurve (F) und der x-Achse eingeschlossene spitze Winkel (α) (bezogen auf die jeweiligen Beträge der Winkel ohne Berücksichtigung der Drehrichtung). Der von der Gerade (G_{f}) im abfallenden Kurvenabschnitt (F_{f}) der Kurve (F) und der x-Achse eingeschlossene spitze Winkel (β) beträgt bevorzugt zwischen 30 und 90 °, insbesondere zwischen 50 ° und 85 °, ganz besonders zwischen 60 ° und 80 °, am besten 76 °.
Die Drehrichtung von der Basislinie auf die Gerade (G_{f}) im abfallenden Kurvenabschnitt (f) ist in der Regel der Drehrichtung von der Basislinie auf die Gerade (Gₛ) im ansteigenden Kurvenabschnitt (Fₛ) entgegengesetzt, wobei der von der Gerade (Gₛ) im ansteigenden Kurvenabschnitt (Fₛ) der Kurve (F) und der Basislinie (X) eingeschlossene spitze Winkel (α) insbesondere zur Vorzugsrichtung (v) hin geöffnet ist, der Scheitelpunkt also in der der Vorzugsrichtung entgegengesetzten Richtung liegt.
Unter den Gegenstand der Erfindung fallen aber auch solche Ausführungsformen, bei denen die beiden Drehrichtungen gleichgerichtet sind (insbesondere solche, bei denen beide Winkel (α, β) den Scheitelpunkt in der Richtung entgegen der Vorzugsrichtung aufweisen. Die Kurvenform (F) entspricht dann einer solchen Segmentform mit in x-Richtung "überspringenden" Scheitelpunkten (Extremwerten).

Wie bereits weiter oben beschrieben kann das unterklebte, Trennsystem (TS) bündig an der rechten Längskante (r_{K}) des Klebebandes (K) oder von dieser im Abstand (V) eingerückt angeordnet sein [(Abstand V = 0 (bündig) bzw. Absztand V ≠ 0 (eingerückt)]. Für den Einsatz der Erfindung im fliegenden Rollenwechsel hat es sich als sehr vorteilhaft herausgestellt, wenn das Trennsystem (TS) in einem Abstand (V) Abstand von bis zu 15 mm, besonders 0,5 bis 7 mm, besser in einem Abstand von 1,5 bis 4 mm, ganz besonders bevorzugt von 2 bis 3,5 mm eingerückt ist. Die Bündigkeit bzw. die vorgenannten Abstands-Werte beziehen sich insbesondere auf den Abstand zwischen der rechten Begrenzungskante (r_{K}) des Klebebandes (K) und die durch die am weitesten rechts liegenden Extremwerte der Segmente definierte Trennsystem-Begrenzungsgerade (r_{TS}) (vgl. Figuren 1b und 1d sowie 4a und 4b).

Wie Versuche ergeben haben, ist es für eine erfolgreiche Prozessführung bei hohen Geschwindigkeiten vorteilhaft, die Kraft für den Spaltvorgang in den spaltfähigen Träger des Spaltstreifens einzuleiten, da es sonst zu lokal unkontrollierten Reißprozessen (oben als "Reißer" bezeichnet) kommt. Hierzu dient der überstehende, durch den Abstand des Spaltstreifens von der Längskante definierte Abschnitt des Klebebandes als Krafteinleithilfe. Reißer konnten dann besonders erfolgreich vermieden werden, wenn dieser Abstand eine gewisse Größe erreicht.
Ist die Einrückung allerdings zu groß (insbesondere größer 3,5 mm), so kommt es vermehrt zu einem Umschlagen des überstehenden, vorderen Abschnitts des Spleißklebebandes und ebenfalls zu unkontrolliertem Verhalten während des Spleißprozesses, wie man auch in Versuchen feststellt.

Der Schnitt bzw. die Sollbruchstelle (P) im gegebenenfalls vorhandenen Abdeckmaterial (A) kann bevorzugt in einem Abstand von 20 bis 40 mm von der linken Begrenzungskante (l_{K}) des Klebebands vorgesehen sein.

Als ganz hervorragend geeignet hat sich ein Klebeband mit den folgenden Abmessungen herausgestellt:
Die folgenden Angaben verstehen sich mit einer (produktionsbedingten) Genauigkeitstoleranz; diese sei mit etwa 5 % angenommen.
Das Klebeband hat eine Breite (Ausdehnung in y-Richtung) von 50 mm und besitzt ein Trennsystem mit einer Abfolge jeweils identischer Segmente, wie diese in Figur 1b dargestellt ist, dessen Basislinie (X) der x-Achse des Klebebandes entspricht. Die Einrückung das unterklebten Trennsystem (TS) von der rechten Längskante (r_{K}) des Klebebandes (K) beträgt 2 mm.
Die Ausdehnung der Segmente in y-Richtung beträgt 15 mm.
Die Ausdehnung eines jeden ansteigenden Kurvenabschnitts (Fₛ) in x-Richtung beträgt 25 mm, die eines jeden abfallenden Kurvenabschnitts (F_{f}) in x-Richtung beträgt 5 mm.
Der von der Geraden (Gₛ) im ansteigenden Kurvenabschnitt (Fₛ) der Kurve (F) und der Basislinie (X) eingeschlossenen spitze Winkel (α) beträgt 33 °. Der von der Geraden (G_{f}) im abfallenden Kurvenabschnitt (f) der Kurve (F) und der Basislinie (X) eingeschlossenen spitze Winkel (β) beträgt 76 ° und weist einen dem Winkel (α) entgegengesetzten Drehsinn auf (entsprechend der Darstellung in der Figur 5).

Die erfindungsgemäßen Klebebänder sind hervorragend geeignet, die Probleme beim Abrollen einer Klebebandrolle zu vermeiden oder zumindest ganz erheblich zu vermindern. Gegenstand der Erfindung ist dementsprechend ein zur "Rolle" gewickeltes erfindungsgemäßes Klebeband, ein sogenannter Rollenwickel. Für derartige Wickel wird üblicherweise die Bezeichnung "Rolle" oder "Klebebandrolle" verwendet, auch wenn es sich bei den Wickeln streng betrachtet um eine archimedische Spirale handelt. Wenn im Rahmen dieser Schrift von Rolle, Klebebandrolle, Rollenwickel oder Wickel geredet wird, so ist hiermit die Wicklung des Klebebandes in einer Weise gemeint, dass der Seitenschnitt der Wicklung die Form einer archimedischen Spirale besitzt (vgl. hierzu Figur 1c).
Insbesondere vorteilhaft ist eine solche Rollenwicklung, bei der das aufgewickelte Klebeband mit einem Abdeckmaterial eingedeckt ist, wie dies zuvor für das Klebeband an sich bereits beschrieben wurde.

Gegenstand der Erfindung ist weiterhin ein Verfahren für den fliegenden Rollenwechsel unter Einsatz eines erfindungsgemäßen Klebebandes.

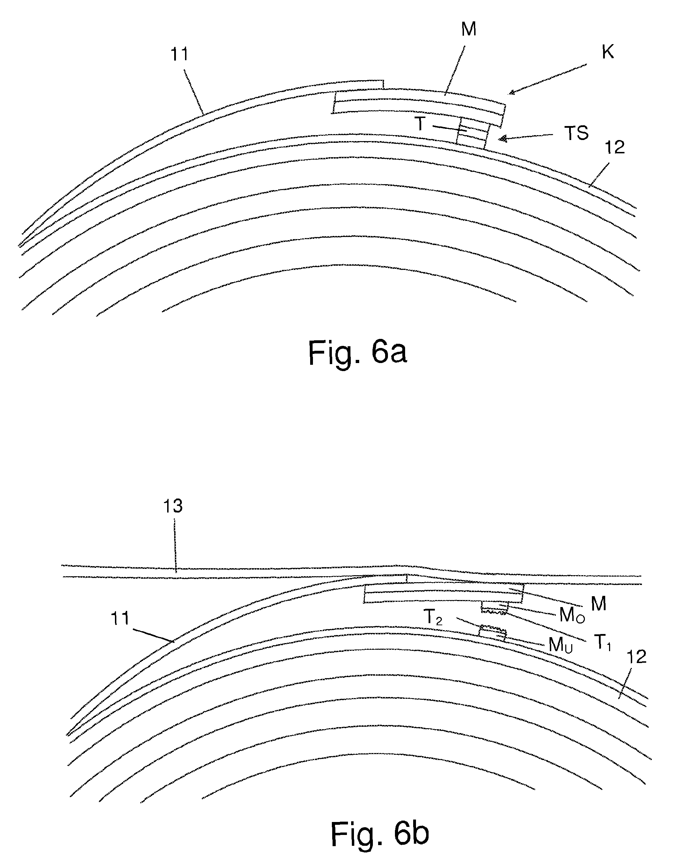

Das erfindungsgemäße Verfahren zum Verbinden zweier Flachbahnen während des fliegenden Rollenwechsel von auf Rollen aufgewickelten Flachbahnmaterial wird schematisch in den Figuren 6a und 6b dargestellt, ohne sich durch die Abbildung unnötig im Gegenstand der Erfindung beschränken zu wollen.
Bei dem erfindungsgemäßen Verfahren wird die oberste Flachbahnwicklung (11) (insbesondere deren Ende oder deren Endbereich) einer neuen Rolle mit einem Klebeband (K), umfassend zumindest ein zur Erzielung einer wieder klebeflächenfrei trennbaren Klebeverbindung geeignetes Trennsystem (TS) an der darunter liegenden Flachbahnwicklung (12), fixiert, so dass ein zum Verbinden mit der ablaufenden Flachbahn (13) benötigter Teil einer Selbstklebemasse (M) offenliegt (vgl. Figur 6a). Daraufhin wird die so ausgerüstete neue Rolle neben eine fast gänzlich abgespulte zu ersetzende alte Rolle plaziert und auf die im wesentlichen gleiche Drehgeschwindigkeit wie diese beschleunigt, dann gegen die alte Flachbahn (13) gedrückt, wobei die offenliegende Selbstklebemasse (M) des Klebebandes (K) mit der alten Flachbahn (13) bei im wesentlichen gleichen Geschwindigkeiten der Bahnen verklebt, während zugleich die mittels des Trennsystem (TS) bewirkte Verklebung der obersten Flachbahnlage (Endlage der Wicklung) (11) auf der darunter liegenden Flachbahnlage (12) derart flächig trennt, dass nach dem Trennvorgang keine klebenden Bereiche offenliegen, wobei ein erfindungsgemäßes Klebeband eingesetzt wird. Die Trennung der Verklebung der obersten Flachbahnlage (11) mit der darunter liegenden Flachbahnlage (12) erfolgt dabei insbesondere nach einem der für das erfindungsgemäße Klebeband (K) bereits beschriebenen Trennmechanismen (vgl. Figur 6b).
In den Figuren 6a und 6b ist beispielhaft, ohne sich dadurch unnötig im Erfindungsgedanken einschränken zu wollen, ein Trennsystem (TS) mit einem Spaltträger (T) dargestellt, welche eine untere (M_{U}) und eine obere (M_{O}) Klebemasse aufweist (siehe hierzu auch die oben gemachten Ausführungen zu derartigen Trennsystemen). Der Trennvorgang wird durch ein Spalten des Systemträgers (T) bewirkt, wobei die Klebemassen (M_{O}, M_{U}) von den Spaltprodukten (T₁, T₂) des Spaltträgers (T) nichtklebend abgedeckt werden.

In einer Weiterentwicklung des erfinderischen Verfahrens wird das Klebeband rechtwinklig zur laufenden Flachbahn verklebt. In anderen vorteilhaften Varianten des erfindungsgemäßen Verfahrens kann die Verklebung des Klebebandes auch in einem spitzen Winkel von bis zu 30° zur laufenden Flachbahn, insbesondere von bis zu 10° erfolgen.
Der Trennvorgang [Trennung der Verklebung der obersten Flachbahnlage (11) mit der darunter liegenden Flachbahnlage (12)] erfolgt dann - insbesondere im Fall des rechtwinklig zur laufenden Flachbahn verklebten Klebebandes - quer zur Basislinie, das heißt, der Spalt-. bzw. Trennvorgang beginnt in den Maxima bzw. Maximumbereichen der rechten Begrenzungskante (r_{TS}) des Trennsystems (TS) und verläuft in Richtung auf dessen Minima bzw. Minimumbereiche, also in Richtung der negativen y-Achse.

Bei dem Spliceverfahren wird das erfindungsgemäße Klebeband (K) in einer geraden Linie unter das Ende der oberste Flachbahnlage (11) einer neuen Flachbahnrolle (oder in einem geringen Abstand vom Ende der obersten Flachbahnwicklung) auf die neue Flachbahnrolle verklebt, so dass ein Teil des Klebebandes (K) frei bleibt, während die Unterseite (U_{K}) des Klebebandes mittels des Trennsystems (TS) [im speziellen für die entsprechenden Klebeband-Ausführungsformen mit der Klebemasse (M_{U}) des Trennsystems (TS); hier nicht im einzelnen dargestellt] auf der darunter liegenden Flachbahnlage verklebt und damit die oberste Bahnlage (insbesondere das Ende der obersten Bahnlage) sichert, wobei gegebenenfalls zunächst nur ein Teil (A₂) der gegebenenfalls auf der Selbstklebemasse (M) befindlichen Abdeckung (A) abgezogen wurde, so dass der zum Spliceverfahren benötigte Teil der Selbstklebemasse noch mit der Abdeckung (A₁) abgedeckt ist und die Rolle in diesem Zustand keine freie klebende Fläche aufweist, worauf zur abschließenden Vorbereitung des Spliceverfahrens die gegebenenfalls noch vorhandene restliche Abdeckung (A₁) entfernt wird, worauf die so ausgerüstete neue Rolle neben eine fast gänzlich abgespulte, zu ersetzende alte Rolle plaziert wird und auf die gleiche Drehgeschwindigkeit wie diese beschleunigt wird, dann gegen die alte Bahn (13) gedrückt wird, wobei die offenliegende Selbstklebemasse (M) des Klebebandes (K) mit der alten Bahn (13) bei im wesentlichen gleichen Geschwindigkeiten der Bahnen verklebt, während zugleich das Trennsystem (TS) die Verklebung zwischen der obersten Flachbahnlage (11) und der darunter liegenden Flachbahnlage (12) trennt, wobei beide Flächen im Bereich der bisherigen Verklebung der obersten Flachbahnlage (11) mit der darunter liegenden Flachbahnwicklung (12) nichtklebend verbleiben.
Nach dem Kontakt des Klebebandes (K) mit der ablaufenden Bahn (13) kommt es also zum Trennvorgang mittels des Trennsystems (TS) des Klebebandes (K), so dass die oberste Flachbahnwicklung (11) des neuen Ballens freigegeben wird und kein klebrigen Rückstände mehr offen vorliegen.

Bei den Flachbahnen handelt es sich insbesondere um Papierbahnen und/oder um Folienbahnen und/oder um Textilmaterialbahnen (Gewebe, Gewirke, Vliese oder dergleichen).

Durch die Form der Segmente kann die entsprechende Spaltkraft - abhängig vom Material - hervorragend eingestellt und somit dem Anforderungsprofil angepasst werden. Die Form bzw. Geometrie des jeweiligen Segments sollte vorteilhaft in Querrichtung des Klebebandes (y-Richtung) eine möglichst geringe Kraft zum Anspalten erfordern. Diese sollte aber auch nicht zu gering sein, um in der Beschleunigungsphase des Ballens nicht zu früh zu öffnen und so zu einem Abriss zu führen. Dies gilt vor allem für gurtgetriebene Anlagen, bei denen im Bereich des Gurtes eine besondere Festigkeit erforderlich ist.
Die genannten Segmente sind quer zur Abrollrichtung des Klebebandes mit einer möglichst geringen Steigung versehen, so dass die Anspaltneigung minimiert wird. Durch die Asymmetrie der Segmente kann trotzdem eine hinreichende Klebfläche sichergestellt werden, und der Spaltvorgang entgegen der y-Richtung kann optimal verlaufen.
Durch die Segmentierung wird aber gleichzeitig sicher gestellt, dass - sollte es bei einem Segment dennoch zu einem frühzeitigen Anspalten kommen - das Anspalten auf das jeweilige Segment begrenzt bleibt und sich gerade aufgrund der Segmentierung nicht fortsetzen kann. Bei einer entsprechenden Anzahl Segmente kann man davon ausgehen, dass die bloße Vorschädigung eines einzelnen Segments über die gesamte Menge an Segmenten auf dem einzusetzenden Klebebandabschnitt zu vernachlässigen ist.

Das erfindungsgemäße Klebeband hat sich als hervorragend für den bestimmungsgemäßen Einsatz geeignet gezeigt.

## Patentansprüche

1. Klebeband für den fliegenden Rollenwechsel mit einer linken (I) und einer rechten (r) Begrenzungskante, umfassend zumindest einen Hauptträger und eine erste Selbstklebemassenschicht auf der Oberseite (O) des Hauptträgers, wobei auf der Unterseite (U) des Hauptträgers ein Trennsystem vorgesehen ist, das geeignet ist, eine Klebeverbindung auf einem Substrat zu bewirken, die derart wieder trennbar ist, dass weder auf der Unterseite des Hauptträgers noch auf dem Substrat im Bereich der getrennten Verbindung klebende Rückstände verbleiben,
wobei das Trennsystem in Form eines mehrfach unterbrochenen Streifens aus einer Mehrzahl von Segmenten aufgebaut ist, der sich in Längsrichtung des Klebebandes (x-Richtung) erstreckt,
wobei die Begrenzungskante jedes der Segmente durch eine Kurve F dargestellt werden kann, die bezüglich eines rechtshändischen, kartesischen (orthogonalen) Koordinatensystems, mit einer in Längsrichtung des Klebebandes liegenden x-Achse und einer senkrecht hierauf stehenden, von links nach rechts zeigenden y-Achse, folgende Bedingungen erfüllt:
- einen am weitesten rechts liegenden Punkt E₁(x₁/yₘₐₓ) ("Extremwert") oder einen eine Mehrzahl am weitesten rechts liegender Punkte umfassenden Bereich B₁ ("Extremwertbereich"), der durch die Punkte E₁ₐ(x₁ₐ/yₘₐₓ) und E_{1b}(x_{1b}/yₘₐₓ) begrenzt ist, mit x₁ₐ < x_{1b},
- einen am wenigsten weit in x-Richtung liegenden Punkt E₂(xₘᵢₙ/y₂) oder einen eine Mehrzahl am wenigsten weit in x-Richtung liegender Punkte umfassenden Bereich B₂, der durch die Punkte E₂ₐ(xₘᵢₓ/y₂ₐ) und E_{2b}(xₘᵢₙ/y_{2b}) begrenzt ist, mit y₂ₐ < y_{2b},
- einen am weitesten in x-Richtung liegenden Punkt E₃(xₘₐₓ/y₃) oder einen eine Mehrzahl am weitesten in x-Richtung liegender Punkte umfassenden Bereich B₃, der durch die Punkte E₃ₐ(xₘₐₓ/y₃ₐ) und E_{3b}(xₘₐₓ/y_{3b}) begrenzt ist, mit y₃ₐ < Y_{3b},
- einen ansteigenden Kurvenabschnitt (Fₛ), der durch die Punkte E₂ bzw. E_{2b} und E₁ bzw. E₁ₐ begrenzt ist,
- einen abfallenden Kurvenabschnitt (F_{f}), der durch die Punkte E₁ bzw. E_{1b} und E₃ bzw. E_{3b} begrenzt ist,
und wobei für die Mehrzahl der Segmente die Steilheit im ansteigenden Kurvenabschnitt (Fₛ) geringer ist als die Steilheit im abfallenden Kurvenabschnitt (F_{f}),
wobei die Steilheit (im Sinne dieser Schrift) eines Kurvenabschnitts den Betrag der Steigung einer Geraden ("Steilheitsgerade") durch die zwei den Kurvenabschnitt begrenzenden Kurvenpunkte bedeutet.

2. Klebeband nach einem der vorangehenden Ansprüche, **dadurch gekennzeichnet, dass**
die Ausdehnung der einzelnen Segmente (S) in x-Richtung um ein Mehrfaches geringer ist als die Ausdehnung des Klebebandes (K) in x-.Richtung.

3. Klebeband nach einem der vorangehenden Ansprüche, **dadurch gekennzeichnet, dass**
die Ausdehnung des durch die Segmente (S) gebildeten Streifens in Querrichtung des Klebebandes (K), also der y-Richtung, geringer ist als die Ausdehnung des Klebebandes (K) in diese Richtung, also geringer als die Breite des Klebebandes.

4. Klebeband nach einem der vorangehenden Ansprüche, **dadurch gekennzeichnet, dass** der Streifen eine Abfolge jeweils identischer Segmente (S) und jeweils identischer Abstände zwischen den Segmenten (S) darstellt, wobei die Segmente (S) in x-Richtung hintereinander angeordnet sind.

5. Klebeband nach einem der vorangehenden Ansprüche, **dadurch gekennzeichnet, dass**
die Segmente jeweils einen weiteren Träger (T) ("Segmentträger") umfassen, der auf seiner Oberseite und seiner Unterseite jeweils mit einer Klebemassenschicht versehen ist, wobei der Segmentträgern (T) flächig spaltbar oder delaminierbar ist.

6. Klebeband nach Anspruch 5, **dadurch gekennzeichnet, dass**
der Segmentträger (T) ein einlagiges Papier ist.

7. Klebeband nach Anspruch 6, **dadurch gekennzeichnet, dass** der Segmentträger (T) ein Verbund aus zwei oder mehreren Schichten ist, insbesondere ein Verbund aus mindesten zwei Papierschichten, ein Verbund aus mindestens zwei Folienschichten oder ein Verbund aus mindestens einer Papierschicht und mindestens einer Folienschicht.

8. Klebeband nach einem der Ansprüche 1 bis 4, **dadurch gekennzeichnet, dass**
die Segmente (S) eine Polymermasse umfassen, die die Klebeverbindung bewirkt.

9. Klebeband nach Anspruch 8, **dadurch gekennzeichnet, dass**
das Polymer in Drucktechnik auf die Unterseite des Klebebandes aufgebracht ist, insbesondere durch Siebdruck oder durch Tiefdruck.

10. Klebeband nach einem der vorangehenden Ansprüche, **dadurch gekennzeichnet, dass**
die Kurve (F) einer Vielzahl der Segmente (S) im Bereich ihrer Extremwerte (E₁) mathematisch differenzierbar ist.

11. Klebeband nach einem der vorangehenden Ansprüche, **dadurch gekennzeichnet, dass**
die Segmentbegrenzungskurve (F) im Verlauf des am wenigsten weit in x-Richtung liegenden Scheitelpunktes E₂ und/oder im Verlauf des am weitesten in x-Richtung liegenden Scheitelpunktes E₃ mathematisch differenzierbar ist.

12. Klebeband nach einem der vorangehenden Ansprüche, **dadurch gekennzeichnet, dass**
die die erste Klebmassenschicht bildende Klebmasse eine solche auf Acrylatbasis, eine solche auf Naturkautschukbasis oder eine solche auf Synthesekautschukbasis ist.

13. Klebeband nach einem der vorangehenden Ansprüche, **dadurch gekennzeichnet, dass**
auf der Unterseite des Hauptträgers außerhalb des mehrfach unterbrochenen Streifens ein oder mehrere weitere Trennsysteme vorgesehen sind, die geeignet sind, eine Klebeverbindung auf einem Substrat zu bewirken, die derart wieder trennbar ist, dass weder auf der Unterseite des Hauptträgers noch auf dem Substrat im Bereich der getrennten Verbindung klebende Rückstände verbleiben.

14. Klebeband nach einem der vorangehenden Ansprüche, **dadurch gekennzeichnet, dass**
die die Klebmassenschicht (M) auf der Oberseite (O_{K}) des Klebebandes (K) bildende Klebmasse eine solche auf Acrylatbasis, eine solche auf Naturkautschukbasis oder eine solche auf Synthesekautschukbasis ist.

15. Klebeband nach einem der vorangehenden Ansprüche, **dadurch gekennzeichnet, dass**
auf der Unterseite (U_{K}) des Klebebandes (K) ein oder mehrere weitere Trennsysteme (TS) vorgesehen sind.

16. Klebeband nach Anspruch 15, **dadurch gekennzeichnet, dass**
nicht alle Trennsysteme (TS) auf der Klebeband-Unterseite (U_{K}) dieselbe Geometrie aufweisen.

17. Verfahren zum Verbinden zweier Flachbahnen während des fliegenden Rollenwechsel von auf Rollen aufgewickelten Flachbahnmaterial, bei welchem die oberste Flachbahnwicklung (11) einer neuen Rolle mit einem Klebeband (K), umfassend zumindest ein zur Erzielung einer wieder klebeflächenfrei trennbaren Klebeverbindung geeignetes Trennsystem (TS) an der darunter liegenden Flachbahnwicklung (12), fixiert wird, so dass ein zum Verbinden mit der ablaufenden Flachbahn (13) benötigter Teil einer Selbstklebemasse (M) auf der Oberseite (O_{K}) des Klebebandes (K) offenliegt, woraufhin die so ausgerüstete neue Rolle neben eine fast gänzlich abgespulte zu ersetzende alte Rolle platziert und auf die im wesentlichen gleiche Drehgeschwindigkeit wie diese beschleunigt wird, dann gegen die alte Flachbahn (13) gedrückt wird, wobei die offenliegende Selbstklebemasse (M) des Klebebandes (K) mit der alten Flachbahn (13) bei im wesentlichen gleichen Geschwindigkeiten der Bahnen verklebt, während zugleich die mittels des Trennsystem (TS) bewirkte Verklebung der obersten Flachbahnlage (11) auf der darunter liegenden Flachbahnlage (12) derart flächig trennt, dass nach dem Trennvorgang keine klebenden Bereiche offenliegen, **dadurch gekennzeichnet, dass** ein Klebeband mit einem segmentierten Trennsystem nach einem der vorangehenden Ansprüche eingesetzt wird.

18. Verfahren nach Anspruch 17, **dadurch gekennzeichnet, dass**
der Trennvorgang des Trennsystems (TS) in den Extremwerten (E₁) bzw. Extremwertbereichen (B₁) der Segmente (S) beginnt, wobei der Spaltvorgang quer zur Basislinie, also in Richtung der negativen y-Achse, verläuft.

19. Rollenwickel eines Klebebandes nach einem der Ansprüche 1 bis 16.
